# EUROPÄISCHE PATENTSCHRIFT

(11) **EP 0 895 456 B1**
(45) Veröffentlichungstag und Bekanntmachung des Hinweises auf die Patenterteilung: **04.04.2001**
(21) Anmeldenummer: 97921694.2
(22) Anmeldetag: 22.04.1997
(51) Int. Cl.: A47B 13/08, A47B 17/03, A47B 21/00, F16B 12/20, A47B 77/04, A47B 83/00, A47B 13/00

(54) **KÜCHENMÖBEL**
KITCHEN FURNITURE
MEUBLE DE CUISINE

(30) Priorität: 26.04.1996 DE 19616801; 30.04.1996 DE 19617366; 06.09.1996 DE 29621944 U; 19.12.1996 DE 19653185
(43) Veröffentlichungstag der Anmeldung: 10.02.1999
(73) Patentinhaber: Dreier Küchen GmbH & Co. KG, 85540 Haar (DE)
(72) Erfinder: DREIER, Horst, D-85598 Baldham (DE)
(74) Vertreter: Manitz, Finsterwald & Partner
(86) Internationale Anmeldenummer: EP9702032
(87) Internationale Veröffentlichungsnummer: WO9740720

(56) Entgegenhaltungen:
- WO-A-95/32644
- DE-U- 9 014 882
- FR-A- 2 040 927
- FR-A- 2 098 820
- FR-A- 2 490 941
- GB-A- 2 025 211
- US-A- 3 920 298
- US-A- 4 869 564

## Beschreibung

Die Erfindung betrifft ein Küchenmöbel nach dem Oberbegriff des Patentanspruchs 1.

Derartige Küchenmöbel sind allgemein bekannt und werden in der Regel als Einbaumöbel verwendet, die exakt an die jeweils gegebenen räumlichen Verhältnisse angepaßt werden müssen. Bei diesen bekannten Küchenmöbeln sind die Oberschrankelemente wandseitig hängend befestigt, während die Unterschrankelemente benachbart zu einer Wand bodenseitig abgestützt sind.

Nachteilig an den bekannten Küchenmöbeln ist die Tatsache, daß sie jeweils durch kostenaufwendige Maßnahmen an die gegebenen räumlichen Verhältnisse angepaßt werden müssen, daß sie nur unter erheblichem Aufwand montier- und demontierbar sind, und daß sie aufgrund der erforderlichen Maßanfertigung beispielsweise nach einem Umzug unter veränderten räumlichen Bedingungen in der Regel nicht mehr wiederverwendbar sind. Außerdem sind im allgemeinen zumindest einige Bauelemente in der Wand zu befestigen.

Die Aufgabe der Erfindung besteht darin, ein Küchenmöbel der eingangs genannten Art derart weiterzubilden, daß die zu ergreifenden Maßnahmen zur Anpassung des Küchenmöbels an die jeweils gegebenen räumlichen Verhältnisse auf ein Minimum beschränkt werden, wobei Montage und Demontage auf einfachste Weise zu bewerkstelligen sein sollen und insbesondere auch eine nachträgliche Veränderung, beispielsweise eine Verkleinerung oder Erweiterung des Küchenmöbels ermöglicht werden soll.

Gelöst wird die Erfindungsaufgabe durch die Merkmale des Patentanspruchs 1.

Erfindungsgemäß sind also sowohl die Vertikalträger als auch die Schrank- und/oder Funktionselemente an der Unterseite der Arbeitsplatte in Längsrichtung der Arbeitsplatte , d.h. parallel zur Wand, an der das Küchenmöbel aufgestellt wird, an beliebigen Stellen der Arbeitsplatte festlegbar, so daß eine Fülle von Variationsmöglichkeiten für die Anpassung an unterschiedliche Raumverhältnisse und unterschiedlich ausgebildete Schrank- und/oder Funktionselemente möglich ist. Alle Elemente sind über die Vertikalträger am Boden abgestützt. Ein zusätzliche Wandbefestigung ist nicht erforderlich.

Nach Anspruch 2 sind die Vertikalträger vorzugsweise als Tragplatten ausbildet.

Vorteilhafte Weiterbildungen der Erfindung sind durch die Ansprüche 3, 4 gekennzeichnet.

Die universelle Einsetzbarkeit des erfindungsgemäßen Küchenmöbels wird durch die Merkmale des Anspruches 5 noch erheblich erweitert, indem auch die Stützen zum Tragen der Oberschrankelemente letztlich an beliebiger Stelle und auch in beliebiger Anzahl auf der Arbeitsplatte angeordnet werden können.

Eine vorteilhafte praktische Ausführungsform entnimmt man Anspruch 6.

Besonders bevorzugt ist die Verwendung eines Profils gemäß Anspruch 7, zumal dieses eine Befestigung der Stützen gemäß den Ansprüchen 8 bis 10 erlaubt, wobei ein Anbohren der Arbeitsplatte vermieden wird. Die Stützen lassen sich so selbst nach einer gewissen Gebrauchszeit des Küchenmöbels an eine andere Stelle verschieben, ohne daß unschöne und schmutzfangende Schraublöcher an der Stelle verbleiben, wo sich die Stütze vorher befunden hatte. Das Profil kann einer Mehrfachnutzung durch die Weiterbildung nach den Ansprüchen 11 oder 12 zugeführt werden. Es kann nach Anspruch 13 außerdem zur Aufnahme einer Rückwand dienen.

Um auch eine problemlose feste Montage des Profils an der Hinterkante der Arbeitsplatte zu gestatten, ist die Weiterbildung nach Anspruch 14 zweckmäßig.

Zur Stabilisierung der Anordnung sind die Merkmale der Ansprüche 15 bis 17 zweckmäßig.

Die universelle Anpaßbarkeit des erfindungsgemäßen Küchenmöbels wird weiter durch die Merkmale des Anspruches 18 gefördert. Besonders bevorzugt ist hierbei die Ausbildung der Trägerplatten nach Anspruch 19, weil hierdurch sowohl die Stützen als auch die Schrank- und/oder Funktionselemente letztlich an beliebigen Stellen der Trägerplatten festlegbar sind.

Das erfindungsgemäße Prinzip der Befestigung von Bauelementen in Längsnuten kann auch für die Befestigung von Schrank- und/oder Funktionselementen auf den Trägerplatten angewendet werden, indem nach Anspruch 20 vorgegangen wird.

Eine bevorzugte bauliche Ausführungsform der Längsnuten ist im Anspruch 21 definiert. Hierdurch wird nicht nur eine problemlose Verschiebbarkeit der an unterschiedlichen Stellen an den Platten anzuordnenden Bauelemente gewährleistet, sondern auch die Übertragung erheblicher Haltekräfte nach der Montage und dem Festklemmen der Gleitsteine in den Längsnuten.

Bevorzugte Anordnungen der Längsnuten entnimmt man den Ansprüchen 22, 23.

Problemlos herstell- und handhabbare Ausbildungen der Gleitsteine mit den daran vorgesehenen Befestigungselementen sind in Anspruch 24 definiert.

Bevorzugte Verbindungsarten zwischen den mit den Gleitsteinen verbundenen Bolzen und den damit zu befestigenden Bauelementen entnimmt man den Ansprüchen 25, 26 und 27.

Weitere vorteilhafte Ausführungsformen sind durch die Patentansprüche 28 bis 30 gekennzeichnet.

Nach Anspruch 31 sind die Längsnuten vorzugsweise in aus Metall, insbesondere Aluminium bestehenden Nutenprofilen ausgebildet, die ihrerseits in Längsrichtung in dazu komplementäre Längskanäle der Arbeits- und/oder Trägerplatten vorzugsweise in Längsrichtung eingeschoben sind. Hierdurch wird nicht nur ein besserer Gegenhalt für die Gleitsteine geschaffen, sondern es wird auch die betreffende Platte entsprechend verstärkt. Bei entsprechend stabiler Ausbildung der Nutenprofile bilden diese das eigentliche tragende Gerüst des Küchenmöbels, welches durch die Vertikalträger bzw. Stützen gehalten wird und an dem die Schrank- und/oder Funktionselemente befestigt sind.

Im einfachsten Falle weisen auch die Nutenprofile insgesamt gemäß Anspruch 32 einen schwalbenschwanzförmigen Querschnitt auf, wodurch jedoch deren tragender Gerüsteffekt begrenzt ist.

Bevorzugt ist die Ausführungsform nach Anspruch 33, weil hier durch das Nutenprofil in erster Linie als ein in die zugeordnete Platte eingeschobener Träger ausgebildet ist, der unten und/oder oben die Längsnuten aufweist. Besonders vorteilhafte Weiterbildungen dieser Ausführungsform entnimmt man den Ansprüchen 34 und 35. Die tragende Funktion der Arbeitsplatte ist dadurch begrenzt, so daß letztere auch weniger stabil z.B. als Spanplatte ausgebildet sein kann.

Um eine einwandfreie Ausrichtung, insbesondere Bündigkeit benachbarter Platten zu gewährleisten, sind die Ausführungsformen nach den Ansprüchen 36 und 37 vorgesehen. Die besonderen Gleitsteine dieser Ausführungsformen ermöglichen es, daß gewisse Niveauunterschiede zwischen benachbarten Platten problemlos ausgeglichen werden können.

Die Erfindung wird im folgenden beispielsweise anhand der Zeichnung beschrieben; in dieser zeigt:
- Figur 1: eine Vorderansicht eines erfindungsgemäßen Küchenmöbels,
- Figur 2: eine Seitenansicht des Küchenmöbels nach Figur 1,
- Figur 3: eine schematische Draufsicht eines Eckbereiches eines erfindungsgemäßen Küchenmöbels mit einer Drehablage,
- Figur 4: eine Draufsicht auf eine Arbeitsplatte eines erfindungsgemäßen Küchenmöbels mit einer Aussparung für ein Funktionselement,
- Figur 5: eine perspektivische Ansicht einer weiteren Ausführungsform eines erfindungsgemäßen Küchenmöbels,
- Figur 6: eine teilweise geschnittene schematische Seitenansicht eines erfindungsgemäßen Küchenmöbels,
- Figur 6a: eine vergrößerte Schnittansicht des in Figur 6 gezeigten erfindungsgemäßen Profils,
- Figur 7: eine entsprechende Schnittansicht an anderer Stelle in Längsrichtung des Küchenmöbels,
- Figur 7a: den Ausschnitt VIIa in Figur 7 in vergrößertem Maßstab und unter zusätzlicher Darstellung der erfindungsgemäßen Dichtung,
- Figur 8: einen schematischen Schnitt nach VIII-VIII in Figur 7,
- Figur 9: die Ansicht einer Arbeitsplatte bzw. einer Trägerplatte gemäß der Erfindung von unten, wobei gestrichelt auch noch eine Längsnutanordnung auf der Oberseite einer erfindungsgemäßen Trägerplatte angedeutet ist,
- Figur 10: einen Horizontalschnitt einer erfindungsgemäßen Stütze dicht oberhalb ihres Fußes,
- Figur 11: einen Schnitt nach Linie XI-XI in Figur 10,
- Figur 12: eine Seitenansicht des oberen Bereichs einer erfindungsgemäßen Stütze mit Kragarm,
- Figur 13: eine schematische Teilschnittansicht zweier mit Schnappverschlüssen übereinander befestigter Schubladenbauelemente des erfindungsgemäßen Küchenmöbels und
- Figur 14: einen vertikalen Längsschnitt durch einen Teil eines erfindungsgemäßen Küchenmöbels im Bereich der Stoßstelle zwischen zwei Arbeitsplatten.

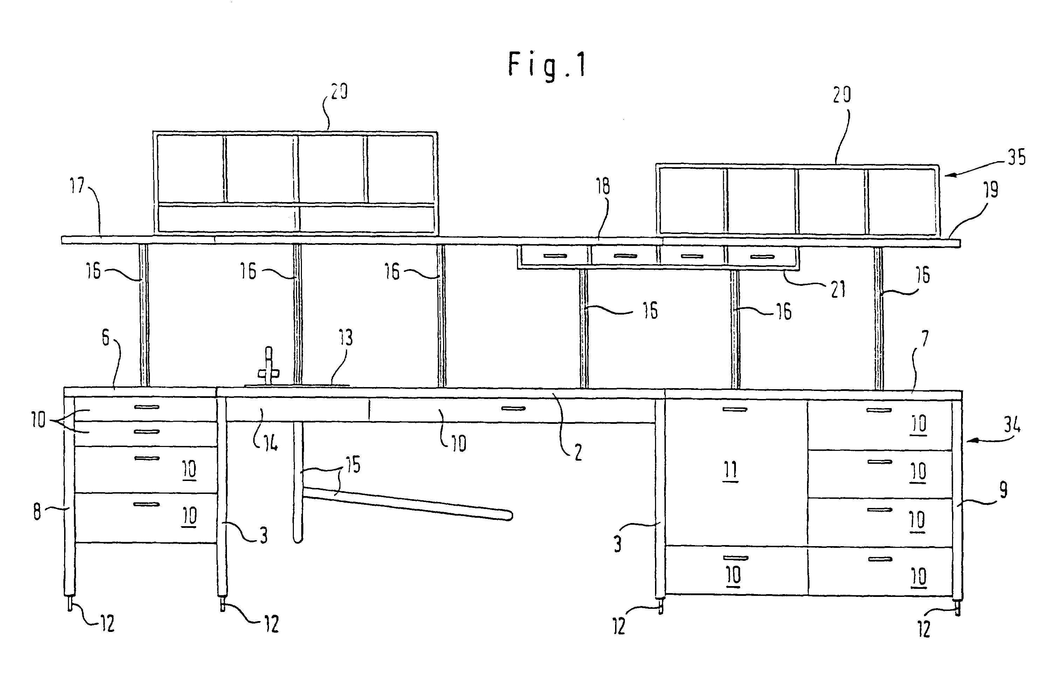

Die Ausführungsform des erfindungsgemäßen Küchenmöbels gemäß Figur 1 weist eine zentrale Arbeitsplatte 2 mit zwei seitlichen, plattenförmigen Vertikalträgern 3 auf, die zusammen eine umgekehrt U-förmige Struktur bilden.

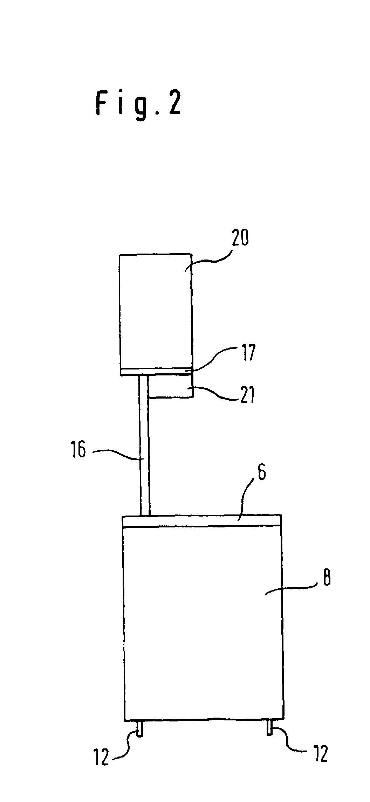

An beide Seiten der Arbeitsplatte 2 schließt jeweils eine fest mit ihr verbundene weitere Arbeitsplatte 6, 7 an, die auf der von der Arbeitsplatte 2 abgewandten Seite jeweils nur einen plattenförmigen Vertikalträger 8, 9 (siehe auch Figur 2) aufweist und eine gekippt L-förmige Struktur besitzt. Auf diese Weise wird für die Arbeitsplatten 6, 7 jeweils nur ein Vertikalträger 8, 9 benötigt, da die abstützende Funktion auf der anderen Seite mit vom Vertikalträger 3 der benachbarten Arbeitsplatte 2 übernommen wird. In derselben Weise lassen sich weitere Arbeitsplatten mit nur einem Vertikalträger an die Arbeitsplatten 6, 7 links und rechts anbauen, wodurch das Küchenmöbel in seiner Gesamtlänge vergrößerbar ist.

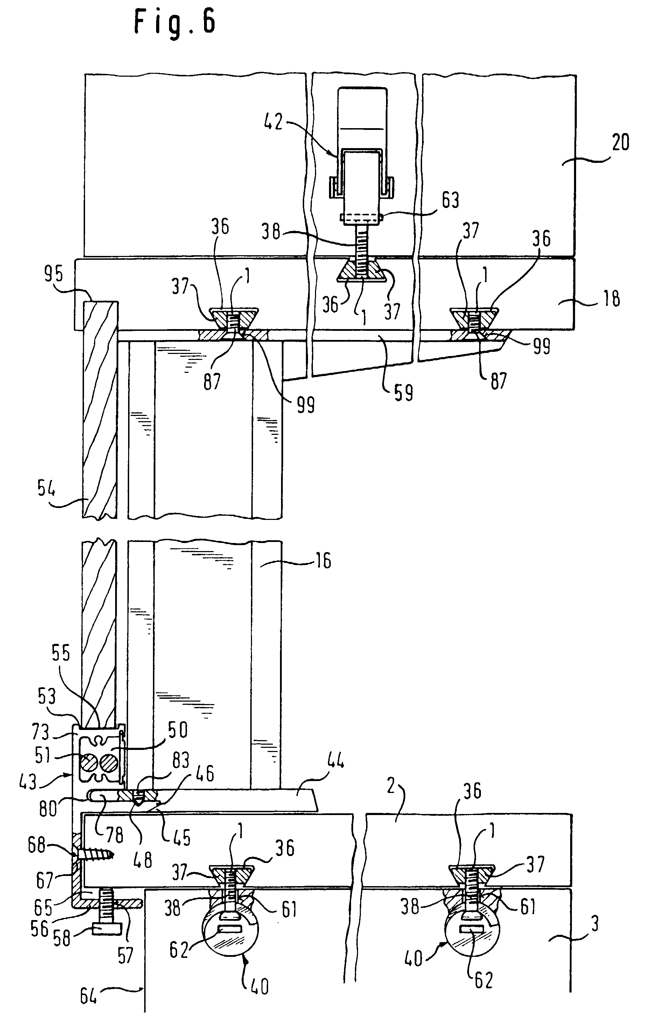

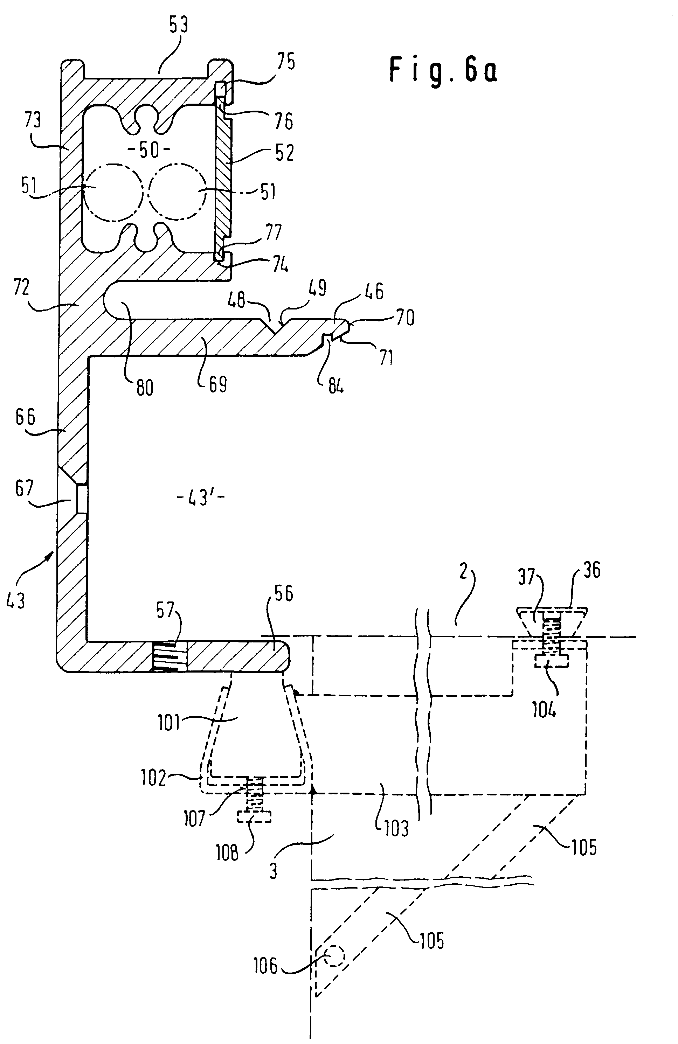

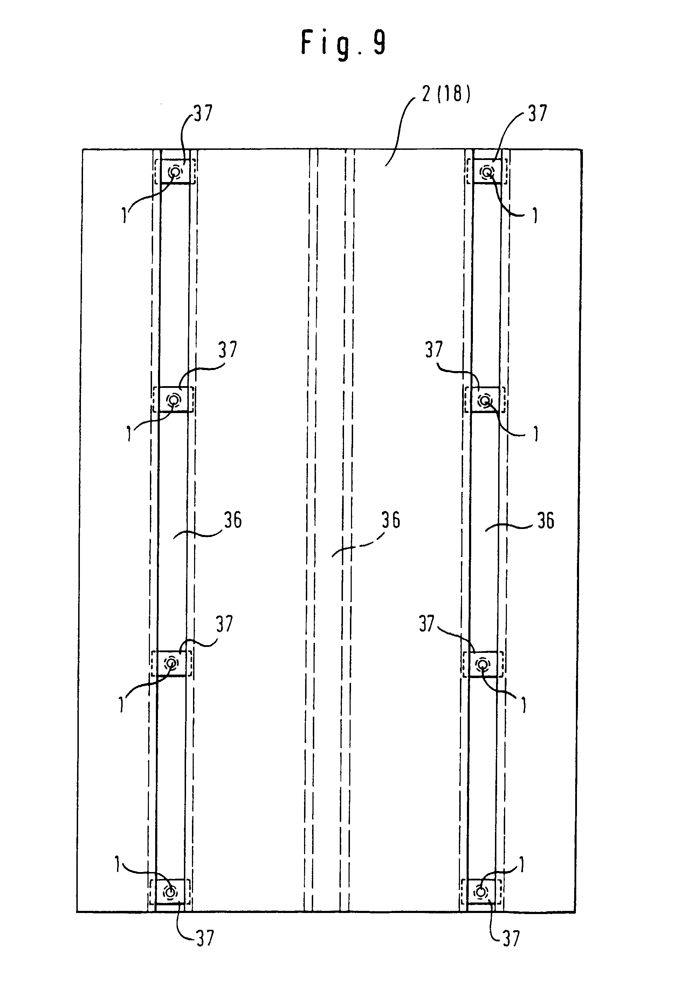

Nach den Figuren 6 und 9 sind in der Unterseite der Arbeitsplatte 2 parallel zwei beabstandete Längsnuten 36 angeordnet, die von der einen Stirnseite der Arbeitsplatte 2 zur anderen durchgehen. Nach Figur 6 weisen die Längsnuten 36 eine Schwalbenschwanzform auf und sind mit über ihre Länge verteilt mit einer Anzahl von Gleitsteinen 37 versehen, die eine zur Schwalbenschwanzform der Längsnuten 36 komplementäre Gestalt besitzen und sich nur über einen geringen, für die Erzielung der erforderlichen Festigkeit ausreichende Länge der Längsnuten 36 erstrecken.

Jeder Gleitstein 37 besitzt eine vertikale Gewindebohrung 1, in welche von unten jeweils ein oben mit entsprechendem Gewinde versehener Bolzen eingeschraubt ist, der sich nach unten in eine Bohrung 61 eines Vertikalträgers 3 erstreckt und am unteren Ende mit einer oder mehreren nicht dargestellten Verbreiterungen versehen ist, die mit einer im Vertikalträger 3 vorgesehenen üblichen Exzentervorrichtung 40 derart zusammenwirkt, daß nach Aufschieben der Arbeitsplatte 2 in Längsrichtung auf die Gleitsteine 37 und Verdrehen der über einen Schlitz 62 von außen zugänglichen Exzenteranordnung 40 der zugeordnete Gleitstein 37 in der Längsnut 36 nach unten gezogen wird und so die Arbeitsplatte 2 fest an die Oberkante des Vertikalträgers zur Anlage bringt.

Die Vertikalträger 8, 9 sind in entsprechender Weise an der Unterseite der Arbeitsplatten 6, 7 befestigt, die ebenfalls mit den Längsnuten 36 der Arbeitsplatte 2 in Längsrichtung ausgerichtete durchgehende Längsnuten in Schwalbenschwanzform aufweisen.

Die sich berührenden Stirnkanten der Arbeitsplatte 2 einerseits und der Arbeitsplatten 6, 7 andererseits sind in bekannter Weise durch Verstiftungen, Exzenterverspannungen etc. fest miteinander verbunden.

An den Arbeitsplatten 2, 6 und 7 bzw. an den Vertikalträgern 3, 8, 9 sind unten Schubelemente 10 oder Schrankelemente 11 hängend derart in den Längsnuten 36 befestigt, daß sie zusammen mit den noch nicht verspannten Gleitsteinen 37 an die gewünschte Stelle unterhalb der Arbeitsplatte 2, 6 oder 7 verschoben werden können.

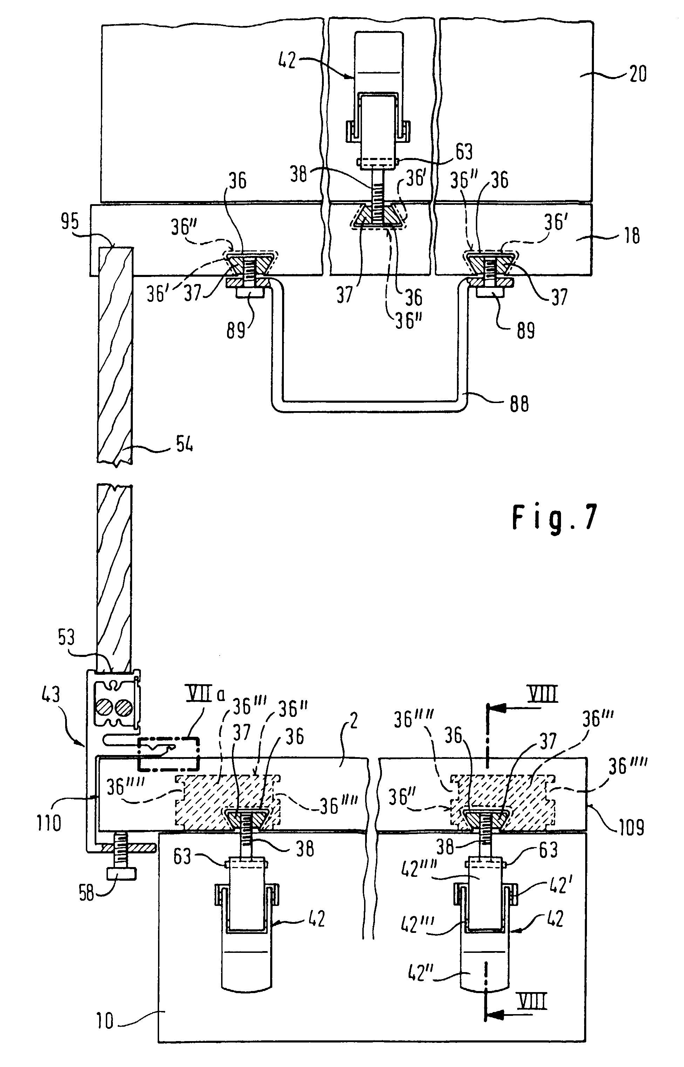

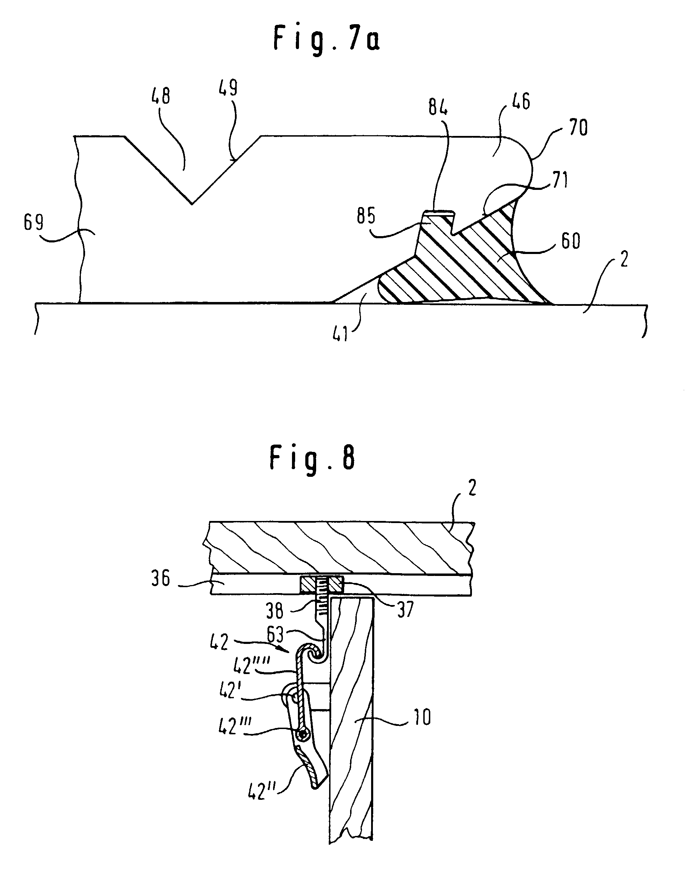

Die Art und Weise, wie ein Schubelement 10 unten an der Arbeitsplatte 2 oder einer der anderen Arbeitsplatten 6, 7 befestigt werden kann, entnimmt man den Figuren 7 und 8. Danach sind an einander gegenüberliegenden Wänden eines Schubelementes 10 hintereinander jeweils zwei kniehebelverschlußartig arbeitende Schnappverschlüsse 42 vorgesehen, die jeweils aus einem bei 42' Schubladen fest angelenkten Betätigungshebel 42'' und einem bei 42''' am Betätigungshebel 42'' angelenkten Hakenhebel 42'''' bestehen.

Der Hakenhebel 42'''' greift von oben in einen unten am Bolzen 38 des Gleitsteins 37 befestigten Haken 63.

Die Montage erfolgt so, daß die Gleitsteine 37 mit den Haken 63 zunächst an die gewünschte Stelle entlang der Längsnuten 36 einer Arbeitsplatte 2, 6, 7 verschoben werden und daß dann der feststehende Rahmen des Schubelementes 10 an der gewünschten Stelle von unten gegen die Arbeitsplatte 2, 6 oder 7 angelegt wird, worauf die Hakenhebel 42'''' von oben in die Haken 63 eingehängt werden. Um einen einwandfreien Eingriff zu gestatten, werden die Schnappverschlüsse 42 an einer vertikal mit den Längsnuten 36 ausgerichteten Stelle an den Innenwänden der Rahmen der Schubelemente 10 angeschraubt.

Durch Verschwenken der Betätigungshebel 42'' nach unten wird das Schubelement 10 von unten gegen die Arbeitsplatte 2, 6, 7 geklemmt, wobei der Betätigungshebel 42'' in die in Figur 8 dargestellte Über-Totpunkt-Lage gelangt, in welcher die Arbeitsplatte 2 mit dem Schubelement 10 sicher und fest verbunden ist.

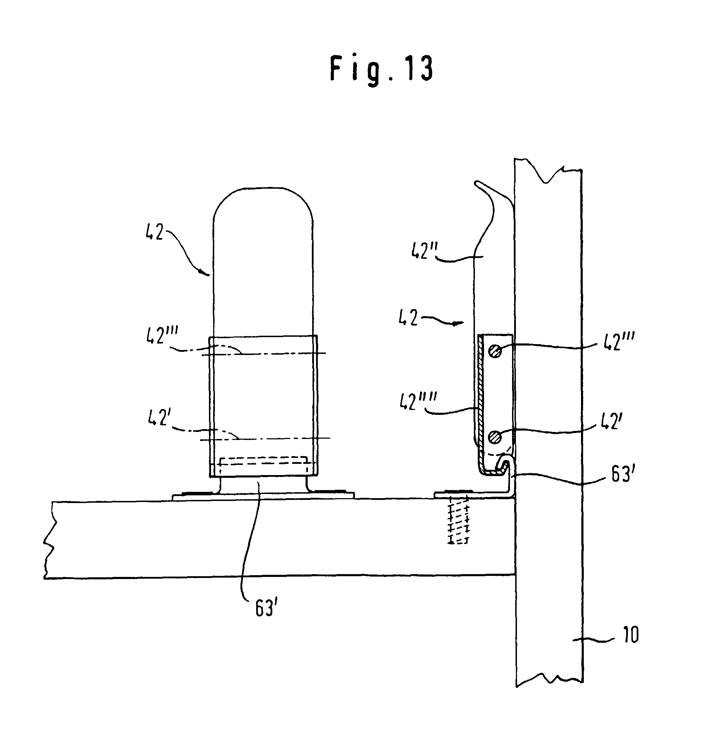

Nach Figur 13 ist unten dem oben unter der Arbeitsplatte 2, 6 oder 7 befestigten Rahmen eines Schubelementes 10 der Rahmen eines weiteren Schubelementes 10 mit ähnlichen Schnappverschlüssen 42 befestigt, wobei jedoch das Gegenstück ein Haken 63' ist, der an der Oberseite eines darunter gehängten Schubelementes 10 derart befestigt ist, daß von oben der am oberen Schubelement 10 befestigte Schnappverschluß 42 über den Hakenhebel 42'''' eingreifen kann.

Auf diese Weise können, wie in Figur 1 rechts dargestellt ist, z.B. vier Schubelemente 10 untereinander an eine Arbeitsplatte 7 angehängt werden. Die seitliche Stabilisierung wird dadurch erzielt, daß von beiden Seiten an die Schubelemente 10 bzw. das Schrankelement 11 Vertikalträger, z.B. 3, 9 oder 3, 8 anliegen.

Die Schubelemente 10 und Schrankelemente 11 sind bodenseitig nicht abgestützt, so daß sämtliche Gewichtskomponenten durch die beschriebene hängende Befestigung dieser Elemente an den Arbeitsplatten 1, 6, 7 aufgenommen werden.

Die Vertikalträger 3, 8, 9 sind nach den Figuren 1, 2 an ihrer Unterseite mit in der Höhe verstellbaren Füßen 12 versehen. Die Höhe der Füße 12 ist dabei so eingestellt, daß zwischen den Schubelementen 10 bzw. Schrankelementen 11 und dem Boden ein ausreichender Abstand besteht, um den entsprechenden Bodenbereich für eine Reinigung gut zugänglich zu halten.

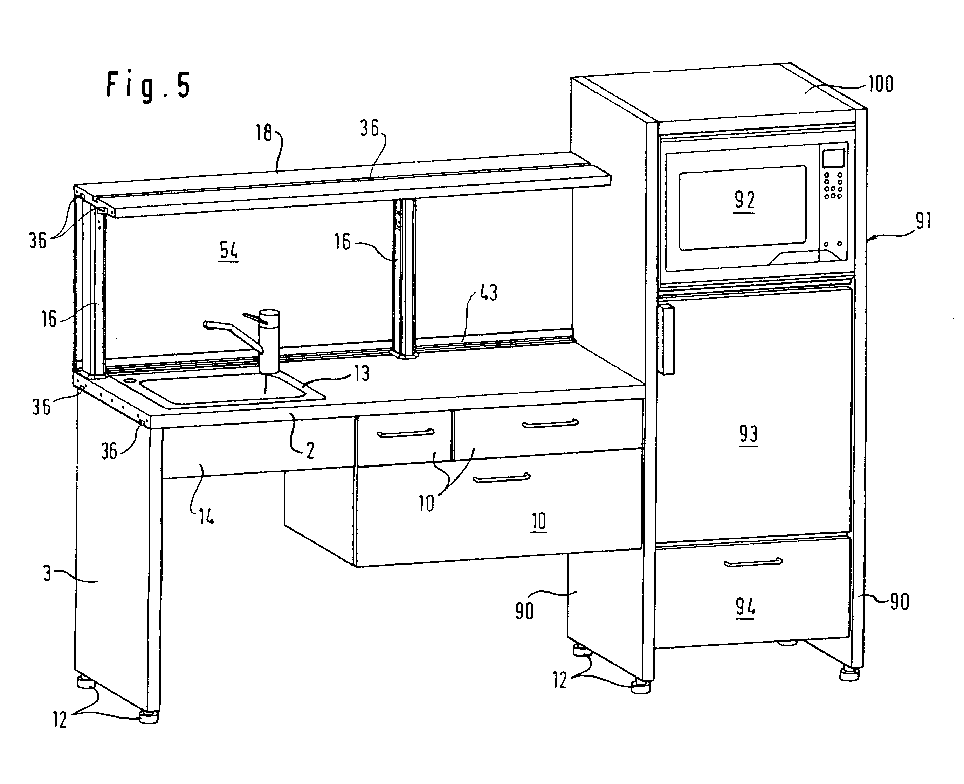

Nach den Figuren 1 und 4 ist die Arbeitsplatte 2 mit einer Ausnehmung 30 zur Aufnahme einer Spüle 13 versehen, welche unterhalb der Arbeitsplatte 2 durch eine Verkleidung 14 abgedeckt ist, die als ebenfalls mittels Gleitsteinen 37 in den Längsnuten 36 befestigter Rahmen ausgebildet sein könnte. Die Spüle 13 ist über geeignete Rohre 15 mit einem nicht dargestellten Anschlußelement einer Sanitärinstallation verbunden.

Nach Figur 4 weisen die Längsnuten 36 einen solchen Abstand auf, daß die Ausnehmung 30 dazwischen Platz hat.

An der Oberseite der Arbeitsplatten 2, 6, 7 sind nach den Figuren 1, 2 von den Vertikalträgern 3, 8, 9 unabhängige vertikal verlaufende Stützen 16 angeordnet, die an ihrem oberen Ende mit Trägerplatten 17, 18, 19 verbunden sind, die an ihren Stirnseiten in geeigneter Weise miteinander verbunden sind und parallel zu den Arbeitsplatten 2, 6, 7 verlaufen. Die Gesamtlängserstreckung der miteinander verbundenen Trägerplatten 17, 18, 19 entspricht jeweils der Gesamtlänge der Arbeitsplattenanordnung 2, 6, 7. Die Trägerplatte 17 ist lediglich über eine Stütze 16 an der Arbeitsplatte 6, die Trägerplatte 18 über drei Stützen 16 an der Arbeitsplatte 2 und die Trägerplatte 19 über zwei Stützen an der Arbeitsplatte 7 abgestützt. An den miteinander in Berührung stehenden Stirnseiten sind die Trägerplatten 17, 18, 19 in üblicher Weise durch klassische Maßnahmen wie Verstiftungen fest miteinander verbunden.

Auf der Oberseite der Trägerplatten 17, 18, 19 sind in der aus Figur 1 und 2 ersichtlichen Weise Oberschrankelemente 20 befestigt, welche, wie weiter unten im einzelnen beschrieben wird, wahlweise an beliebigen Positionen in Längsrichtung festgelegt werden können. In denjenigen Bereichen der Trägerplatten 17, 18, 19, in denen kein Oberschrankelement 20 vorhanden ist, dienen die Trägerplatten 17, 18, 19 als Regal-bzw. Abstellfläche.

Auch an der Unterseite der Trägerplatten 17, 18, 19 sind Oberschrankelemente beispielsweise in Form von Schubfächern 21 vorgesehen, welche in der weiter unten beschriebenen Weise hängend an den Trägerplatten 18, 19 befestigt sind.

Nach Figur 1 bilden die Arbeitsplatten 2, 6, 7 mit den Vertikalträgern 3, 8, 9 und den Schubelementen 10 sowie dem Schrankelement 11 insgesamt ein Unterschrankelement 34, während die Trägerplatten 17, 18, 19 mit den Schränken 20 und den Schubelementen 21 ein Oberschrankelement 35 darstellen.

Die Unterschrankelemente 10, 11 sowie die Oberschrankelemente 20, 21 können auch durch Funktionselemente beispielsweise Öfen, Mikrowellenherde, Geschirrspülmaschinen, Kühlschränke etc. ersetzt werden, sofern diese mit den noch im einzelnen zu beschreibenden erfindungsgemäßen Befestigungsmitteln versehen sind.

Die Art der Befestigung der Stützen 16 an den Arbeitsplatten 2, 6 oder 7, der Trägerplatten 17, 18, 19 an den Stützen 16 und der Schrankelemente 20 sowie der Schubladenelemente 21 an den Trägerplatten 17, 18, 19 wird im folgenden anhand der Figuren 6 bis 12 im einzelnen beschrieben.

Nachdem die Arbeitsplatten 2 (6, 7) in der oben beschriebenen Weise gemäß Figur 6 an den Vertikalträgern 3 (8, 9) befestigt worden sind, und zwar in der Weise, daß die Arbeitsplatten 2, 6 oder 7 um ein Stück über die Hinterkante 64 der vorzugsweise plattenartig ausgebildeten Vertikalträger 3 (8, 9) vorstehen, wird auf dem hinteren Teil der Arbeitsplatten 2, 6, 7 ein erfindungsgemäßes U-Profil 43 aufgeschoben, welches in Figur 6a vergrößert gezeigt ist.

Mit einem U-förmigen Unterteil 43' übergreift das Profil 43 die Hinterkante der Arbeitsplatten 2, 6 und 7, wobei der untere Schenkel 56 auf der Unterseite der Arbeitsplatte 2, 6 oder 7 zu liegen kommt.

In bestimmten Abständen in Längsrichtung sind im Schenkel 56 vertikale Gewindebohrungen 57 vorgesehen, in welche nach Figur 6 von unten Ausgleichsschrauben 58 eingreifen. Zwischen dem Schenkel 56 und der Unterseite der Arbeitsplatte 2, 6 oder 7 befindet sich ein deutliches Spiel 65, welches durch die entsprechend tief eingeschraubten Ausgleichsschrauben überbrückt wird. Auf diese Weise sind bei der Dicke der Arbeitsplatte 2 erhebliche Toleranzen zulässig, ohne daß der sichere Sitz des Profils 43 an der Arbeitsplatte beeinträchtigt wird.

Der rechtwinklig zum unteren Schenkel 56 angeordnete Vertikalsteg 66 weist über seine Länge verteilt zahlreiche Befestigungsbohrungen 67 auf, in welche nach Anbringen des Profils 43 an der Arbeitsplatte 2, 6 oder 7 Schrauben 65 eingesetzt und dann in die hintere Stirnseite der Arbeitsplatte 2, 6 oder 7 eingeschraubt werden. Auf diese Weise wird das Profil 43 sicher an den Arbeitsplatten 2, 6 oder 7 festgelegt.

Der parallel zum unteren Schenkel 56 verlaufende obere Schenkel 69 des Unterteils 43' erstreckt sich in Richtung der Vorderkante der Arbeitsplatte 2, 6 oder 7 deutlich weiter als der untere Schenkel 56. Er liegt bis annähernd zu seinem vorderen Ende flach auf der Oberfläche der Arbeitsplatte 2, 6 oder 7 auf. An seinem vorderen Ende besitzt der obere Schenkel 69 einen Vorsprung 46 mit einer schräg von der Arbeitsfläche nach vorn schräg ansteigenden Schrägfläche 71 auf, die bis zur abgerundeten Vorderkante 70 des Vorsprunges 46 verläuft.

Die Oberfläche des oberen Schenkels 69 ist nahe dem Vorsprung 45 mit einer sich in Längsrichtung erstreckenden V-Nut 48 versehen.

Auf dem Unterteil 43' sitzt über ein hinteres und mit dem Vertikalsteg 66 ausgerichtetes Verbindungsstück 72 ein Hohlprofilteil 73, welches die Form eines nach rechts umgekippten U hat, das an seiner vorderen Seite durch einen vorzugsweise aus Aluminium bestehenden Verschlußstreifen 52, der in obere und untere rinnenartige Längsausnehmungen 74 bzw. 75 eingreift, verschlossen ist. Oberhalb der oberen Eingriffsfeder 76 ist im geschlossenen Zustand des Längshohlraumes 50 noch ein vertikales Spiel vorgesehen, derart, daß durch Anheben des Verschlußstreifens 52 aus der in Figur 6a dargestellten Position die untere Eingriffsfeder 77 aus der unteren Ausnehmung 74 ausgehoben und dadurch der Verschlußstreifen 52 durch Kippen nach vorn aus der Schließlage herausgenommen werden kann. Grundsätzlich kann der Verschlußstreifen 52 auch durch Längsverschiebung vom Hohlprofilteil 73 entfernt bzw. in diesen eingesetzt werden.

Nach den Figuren 6 und 6a können in dem Längshohlraum 50 des Hohlprofilteils 73 schematisch angedeutete Leitungen 51 verlegt werden, was bei abgenommenem Verschlußstreifen 52 von der Vorderseite her bequem ausgeführt werden kann.

Auf seiner Oberseite weist das Hohlprofilteil 73 einen Längskanal 53 auf, der nach Figur 6 und 7 zur Aufnahme einer das Möbel nach hinten abschließenden Rückwand 54 dient. Die Unterkante 55 der Rückwand 54 liegt somit auf dem Profil 43 innerhalb des Längskanals 53 auf.

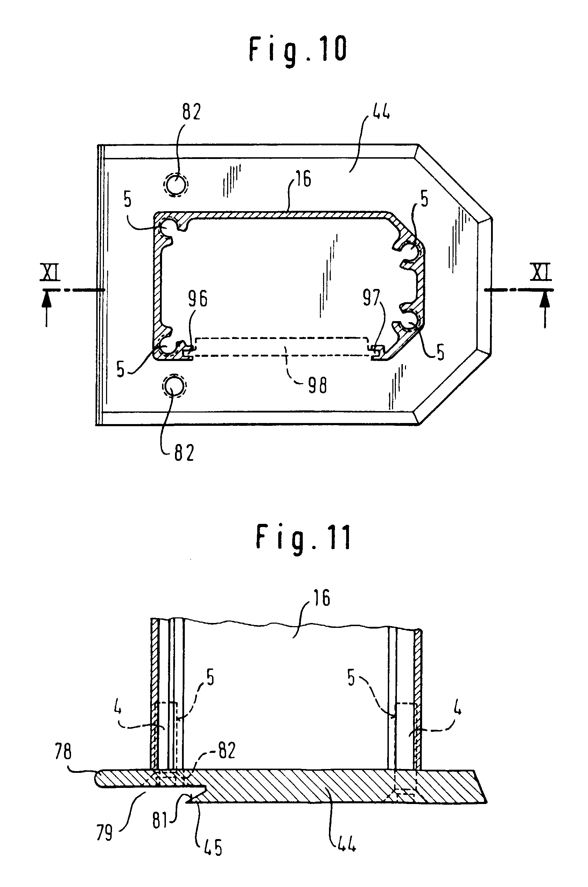

Nach den Figuren 6, 10 und 11 ist die Stütze 16 als einseitig offenes Hohlprofil ausgebildet, welches unten in einem Fuß 44 mündet, der allseits über den Querschnitt der Stütze 16 vorsteht und mittels Schrauben 4, die in vertikale Gewindebohrungen 5 in den inneren Eckbereichen der Stütze 16 von unten eingeschraubt sind, mit der Stütze 16 fest verbunden ist. An den Rändern der offenen Seite der Stütze 16 befinden sich Vertikalnuten 96, 97, in welche vorzugsweise von oben eine in Figur 10 gestrichelt angedeutete Verschlußplatte 98 eingeschoben werden kann, an der beispielsweise Schalter, Steckdosen etc. befestigt werden können, die für die Funktion des Küchenmöbels von Bedeutung sind.

Der Fuß 44 ist so gestaltet, daß er über den größten Teil seiner Fläche auf der Oberseite der Arbeitsplatte 2, 6 oder 7 aufliegt. Im hinteren unteren Bereich weist der Fuß jedoch eine insbesondere aus Figur 11 ersichtliche Ausnehmung 79 auf, derart, daß darüber ein sich nach hinten erstreckender Vorsprung 78 gebildet ist, der komplementär zu dem vor dem Verbindungsstück 72 des Profils 43 (Figur 6a) vorhandenen und nach vorn offenen Schlitz 80 ausgebildet ist.

Der Fuß 44 kann mit seinem hinteren Vorsprung 78 an jeder Stelle des Profils 43 in den Schlitz 80 eingeschoben werden, wobei eine am vorderen Ende der Ausnehmung 79 vorgesehene und nach hinten vorspringende Nase 45 (Figur 11) unter den Vorsprung 46 des oberen Schenkels 69 des Unterteils 43' des Profils 43 greift und eine obere Schrägfläche 81 der Nase 45 (Figur 11) mit der unteren Schrägfläche 71 des Vorsprungs 46 (Figur 6a) in Eingriff kommt, wodurch es zu einer Keilklemmwirkung zwischen den Elementen 45, 46 kommt, wenn der Fuß 44 in Richtung auf das Profil 43 gedrückt bzw. gezogen wird.

Unmittelbar hinter der Nase 45 sind im Fuß auf entgegengesetzten Seiten Gewindebohrungen 82 vorgesehen, in die Madenschrauben 83 (Figur 6) eindrehbar sind. Die Gewindebohrungen 82 sind mit der V-Nut 48 derart in Richtung quer zur Längsrichtung ausgerichtet, daß nach dem Einschieben des Vorsprunges 78 (Figur 11) in den Schlitz 80 des Profils 43 bis zum Anschlag die in die Gewindebohrungen 82 eingeschraubten Madenschrauben auf die vordere Flanke 49 der V-Nut zu liegen kommen. Auf diese Weise wird beim Anziehen der Madenschrauben 83 eine den Fuß 44 weiter in Richtung auf das Profil 43 ziehende Kraft erzeugt, wodurch, ohne daß die Arbeitsplatten 2, 6 oder 7 angebohrt werden müßten, über das Profil 43 ein absolut fester Sitz des Fußes 44 und damit der Stütze 16 auf der Arbeitsplatte 2, 6 oder 7 gewährleistet wird.

Aus Figur 7a ist ersichtlich, wie der Spalt 41 unterhalb des Vorsprunges 46 mit der unteren Schrägfläche 71 dicht verschlossen werden kann. Von vorn wird zu diesem Zweck ein sich über die gesamte Länge zwischen zwei Stützen 16 erstreckender, in der aus Figur 7a ersichtlichen Weise profilierter Dichtstreifen 60 eingedrückt, zu dessen Halt an der Schrägfläche 71 eine sich über die gesamte Länge des Profils erstreckende Haltenut 84 vorgesehen ist, in welche eine Halterippe 85 des Dichtungsstreifens 60 eingreift.

Erfindungsgemäß kann das Profil 43 auch zum Zwecke einer Seitenstabilisierung des Unterschrankelementes 34 in der in Figur 6a gestrichelt angedeuteten Weise unten mit einer sich über die gesamte Profillänge erstreckenden Rippe 101 versehen sein, die im oberen Bereich hinterschnitten ist und einen in Längsrichtung darauf verschiebbaren Schieber 102 aufnehmen kann, der einen sich entlang eines Vertikalträgers 3 unterhalb der Arbeitsplatte 2 erstreckenden Arm 103 aufweist, welcher sich bis zu einer der Längsnuten 36 erstreckt und dort mittels einer Schraube 104 mit einem in der Längsnut 36 angeordneten Gleitstein 37 verschraubt ist.

Von dem in der Längsnut 36 befestigten Ende des Armes 103 erstreckt sich eine Schrägstrebe 105 beispielsweise unter einem Winkel von 45° zur Hinterkante des Vertikalträgers 3, wo sie ein Befestigungsloch 106 aufweist, mittels dessen das untere Ende der Schrägstrebe 105 mit dem Vertikalträger 3 verschraubt werden kann.

Durch diese erfindungsgemäßen Maßnahmen wird eine wesentliche Stabilisierung der Verbindung zwischen der Arbeitsplatte 2 und dem Vertikalträger 3 insbesondere in Längsrichtung erzielt.

Die Rippe 101 soll vorzugsweise vor den Gewindebohrungen 57 in einem solchen Abstand angeordnet sein, daß die Ausgleichsschrauben 58 noch problemlos eingedreht werden können. Eine von unten in eine Gewindebohrung 107 des Schiebers 102 eingedrehte Schraube 108 gestattet es, den Schieber wahlweise so von der Rippe 101 zu lösen, daß er in Längsrichtung derselben an eine gewünschte Stelle verschoben werden kann, wo der Arm 103 an dem Vertikalträger 3 seitlich von innen oder außen anliegt. Durch Festziehen der Schraube 108 kann dann eine formschlüssige Verbindung zwischen der Rippe 101 und dem Schieber 102 hergestellt werden.

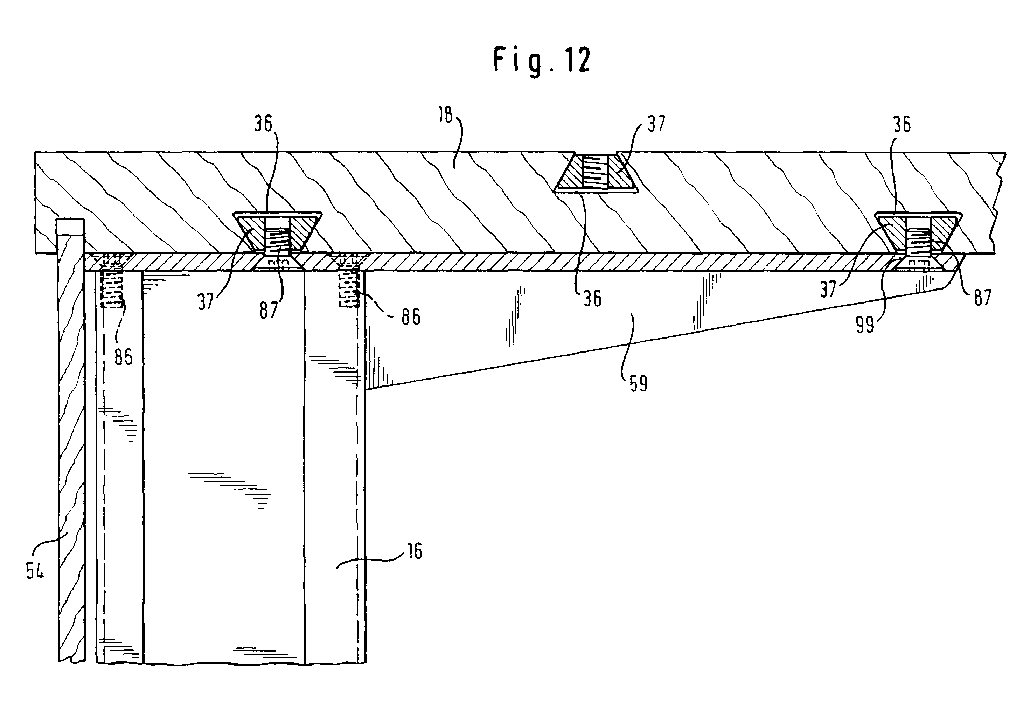

Nach Figur 6 und 12 weist die Stütze 16 an ihrem oberen Ende einen nach vorn ragenden Kragarm 59 auf, der z.B. mittels Schrauben 86 am oberen Ende der Stütze 16 befestigt ist.

Erfindungsgemäß sind auch die Trägerplatten 17, 18, 19 gemäß Figur 9 mit unteren Längsnuten 36 in Schwalbenschwanzform versehen, in denen sich wieder eine Anzahl von Gleitsteinen 37 befinden, die vertikale Gewindebohrungen 1 aufweisen, in welche nach Figur 6 von unten in entsprechende Bohrungen 99 des Kragarmes 59 eingesteckte Schrauben 87 eingeschraubt sind, wodurch die Gleitsteine 37 gegen die V-förmigen Berandungen der Längsnuten 36 gezogen und so die Trägerplatte 18 fest an den Kragarm 59 angedrückt wird. Die Befestigung der Trägerplatten 17, 18, 19 an den Kragarmen 59 erfolgt also nach dem gleichen Prinzip wie die Befestigung der Arbeitsplatten 2, 6 oder 7 an den Vertikalträgern 3, 8, 9.

Wie sich aus Figur 7 ergibt, können ebenso wie in den Längsnuten 36 der Arbeitsplatten 2, 6 oder 7 an der Unterseite der Trägerplatten 18 Schrank- und/oder Funktionselemente verschiebbar befestigt werden, wie das in Figur 7 am Beispiel eines mittels Gleitsteinen 37 in die unteren Nuten 36 der Arbeitsplatte 18 eingehängten Korbes 88 gezeigt ist, der mittels Schraubbolzen 89 an den Gleitsteinen 37 derart festgeschraubt ist, daß die Gleitsteine 37 sich innerhalb der Schwalbenschwanz-Längsnuten 36 verkeilen. Auf diese Weise können beliebige sonstige Elemente einschließlich Schrankund Funktionselementen auch an den oberen Trägerplatten 17, 18, 19 an beliebigen Längspositionen befestigt werden.

Wie in Figur 9 angedeutet und in Figur 6, 7 im einzelnen gezeigt, ist auch in der Oberseite der Trägerplatten 17, 18 oder 19 in der Mitte eine schwalbenschwanzförmige Längsnut 36 vorgesehen, die Gleitsteine 37 aufnimmt, welche über nach oben vorstehende Bolzen 38 mit Haken 63 an ihrem Ende an Schnappverschlüssen 42 angreifen, die an den Wänden eines Oberschrankelementes 20 vorgesehen sind.

Ähnlich wie die Schubelemente nach den Figuren 7 und 8 können so die oben auf den Trägerplatten 17, 18, 19 angeordneten Oberschrankelemente 20 an beliebigen Stellen in Längsrichtung der Platten 17, 18, 19 verschoben und durch Verspannen der zugeordneten Gleitsteine 37 mittels der Schnappverschlüsse 42 festgelegt werden.

In Figur 7 ist auch gestrichelt angedeutet, daß die Längsnuten 36 bevorzugt in sich über die gesamte Länge der Platten 7, 18 erstreckenden Nutenprofilen 36', 36''' vorgesehen sind, welche ihrerseits in entsprechend den Längsnuten 36 geformten Längskanälen 36'' der Arbeitsplatte 2 bzw. der Trägerplatte 18 untergebracht sind. Auf dieser Weise wird nicht nur ein besserer Gegenhalt für die Gleitsteine 37 erzielt, sondern es werden die Platten 2, 18 auch verstärkt, und zwar insbesondere dann, wenn die Nutenprofile 36', 36''' aus Metall, insbesondere Aluminium bestehen.

Die in der Trägerplatte 18 nach Figur 7 vorgesehenen Nutenprofile 36' weisen ebenso wie die Nuten 36 selbst einen schwalbenschwanzförmigen Querschnitt auf, wodurch in erster Linie eine bessere Halterung der Gleitsteine 37, aber auch eine Verstärkung der Trägerplatte 18 erzielt wird.

Insbesondere im Bereich der Arbeitsplatten bestehen die Nutenprofile 36''' jedoch bevorzugt aus trägerartigen Gebilden mit insbesondere annähernd rechteckförmigem Querschnitt, wobei in den Nutenprofilen 36''' vorgesehene Längs-Vertiefungen 36'''' den Halt des Nutenprofils 36' in den entsprechend geformten Längskanälen 36'' der Arbeitsplatte 2 verbessern.

Wie aus Figur 7 ersichtlich, sind die Nutenprofile 36''' unsymmetrisch zur vertikalen Längsmittelebene der Längsnuten 36 ausgebildet, indem die Längsnuten 36 sich näher an der Mitte der Arbeitsplatte 2 befinden und die eine Hälfte des Nutenprofils 36''' sich deutlich über die Nuten 36 hinaus in Richtung des vorderen bzw. hinteren Randes 109, 110 der Arbeitsplatte 2 erstreckt. Auf diese Weise befinden sich die Nutenprofile 36''' weitgehend in Bereichen der Arbeitsplatte 2, wo sie für etwaige Einbauten zwischen den beiden Längsnuten 36 nicht stören. Insbesondere kann auf diese Weise zwischen den beiden parallel verlaufenden Nutenprofilen 36"' eine Ausnehmung 30 (Fig. 4) für die Aufnahme einer Spüle 13 (Fig. 1, 5) untergebracht werden.

Insbesondere bei Verwendung der trägerartigen Nutenprofile 36''' nach Figur 7 wird auf diese Weise ein Gerüst gebildet, welches von den Vertikalträgern 3 getragen wird und seinerseits die Schrank- und/oder Funktionselemente 10 trägt. Die Arbeitsplatte 2 wird auf diese Weise von ihrer Funktion als Träger zumindest weitgehend entlastet und durch die in ihre Längskanäle 36'' eingeschobenen Nutenprofile 36''' derart verstärkt, daß z.B. auch einfache Spanplatten als Arbeitsplatten verwendet werden können.

Grundsätzlich sollten bei allen Ausführungsformen der Erfindung die Längsnuten 36 in metallischen Nutenprofilen 36' bzw. 36''' ausgebildet sein.

Bei einer weiteren zeichnerisch nicht dargestellten Ausführungsform sind zusätzlich zu schwalbenschwanzförmigen Nutenprofilen 36' vorzugsweise hinter der hinteren und vor der vorderen Längsnut 36 insbesondere von unten in die Arbeitsplatte metallische Längsprofile eingelassen, welche mit den Nutenprofilen 36' nicht verbunden sind und eine reine Verstärkungsfunktion haben.

Figur 5 zeigt beispielsweise ein komplettes erfindungsgemäßes Küchenmöbel, bei dem die Arbeitsplatte 2 nur an der linken Seite einen in den Längsnuten 36 an der Unterseite der Arbeitsplatte befestigten Vertikalträger 3 aufweist, während die Arbeitsplatte 2 an der rechten Seite an der linken Wange 90 eines Hochschrankes 91 in klassischer Weise befestigt ist, an den auch das Profil 43 und die obere Trägerplatte 18 angrenzt, die mittels zweier erfindungsgemäßer Stützen 16 von der Arbeitsplatte 2 getragen wird. Im Hochschrank 91 sind beispielsweise ein Mikrowellengerät 92, ein Kühlschrank 93 und eine untere Schublade 94 angeordnet. Die Deckwand 100 kann auf ihrer Unterseite analog der Arbeitsplatte 2 und der Trägerplatte 18 mit schwalbenschwanzförmigen Längsnuten versehen sein, um beispielsweise statt des Mikrowellengerätes 92 dort ein Schubladenelement in der gleichen Weise anbringen zu können, wie das oben in bezug auf die Arbeitsplatte 2 beschrieben worden ist.

An die Unterseite und Oberseite der Trägerplatte 18 können mittels der Längsnuten 36 und der darin verschiebbaren Gleitsteine 37 beliebige Schrank- und Funktionselemente oder sonstige Bauelemente an jeder gewünschten Stelle befestigt werden.

Bei der in Figur 2 dargestellten Ausführungsform verläuft die Rückwand des Oberschrankelements 20 in der gleichen Vertikalebene wie die Rückseite des Vertikalträgers 8. Das Oberschrankelement 20 besitzt eine geringere, insbesondere ungefähr die halbe Tiefe der Vertikalträger 8. Um die auf die Stützen 16 wirkenden Gewichtsmomente herabzusetzen, verläuft das Oberschrankelement 20 von der Hinterseite des Möbels nach vorn etwa bis zu dessen halber Tiefe.

Die Stützen 16 sind gegenüber der durch die Rückwand des Oberschrankelements 20 definierten Ebene geringfügig nach vorne versetzt, um auf diese Weise eine günstigere Kraftübertragung vom Oberschrankelement 20 auf die Arbeitsplatte 2, 6, 7 zu erreichen. An der Rückseite der Stützen 16 oder in hinteren unteren Nuten 15 der Trägerplatten 17, 18, 19 kann gemäß Figur 6 eine Rückwand 54 angeordnet sein, die unten im Längskanal 53 des Profils 43 ruht.

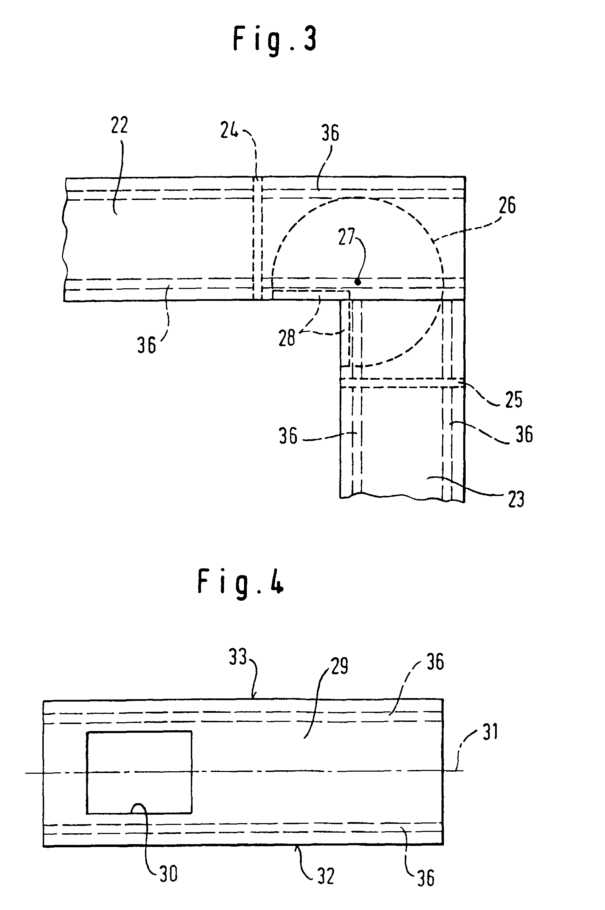

Figur 3 zeigt die schematische Draufsicht auf den Eckbereich eines erfindungsgemäßen Küchenmöbels in einer bevorzugten Ausführungsform. Zwei unten jeweils zwei parallele Längsnuten 36 aufweisende Arbeitsplatten 22, 23 verlaufen rechtwinklig zueinander, wobei die Stirnseite der Arbeitsplatte 23 an den Endbereich einer Längsseite der Arbeitsplatte 22 angrenzt und mit dieser verbunden ist. Die unter einem rechten Winkel zueinander angeordneten Vertikalträger 24, 25 sind gegenüber dem dem Eckbereich zugewandten Ende der jeweiligen Arbeitsplatte 22, 23 versetzt angeordnet, um auf diese Weise einen eckseitig gelegenen Freiraum zur Aufnahme einer Drehablage 26 zu schaffen. Aufgrund der erfindungsgemäßen Befestigung in Längsnuten 36 stellt diese Versetzung kein Problem dar.

Im hinteren Bereich ist nach Figur 6 an der Unterseite der Trägerplatte 18 eine Längsnut 95 vorgesehen, in welche das obere Ende der Rückwand 54 hineinpaßt, welches unten im Längskanal 53 des Profils 43 ruht.

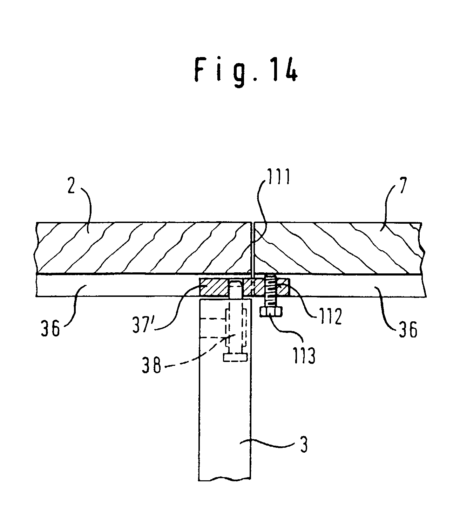

Figur 14 zeigt die Stoßstelle 111 zwischen zwei aneinander angrenzenden Arbeitsplatten 2, 7, wobei die Arbeitsplatte 2 an ihrem nahe der Stoßstelle 111 gelegenen Ende über einen Gleitstein 37' in der zuvor beschriebenen Weise mit einem Vertikalträger 3 fest verbunden ist. Nach Figur 14 erstreckt sich jedoch der Gleitstein 37' in die Längsnut 36 der benachbarten Arbeitsplatte 7, wo der Gleitstein 37' eine Vertikal-Gewindebohrung 112 aufweist, in die von unten eine Justierschraube 113 eingeschraubt ist. Durch entsprechende Einschraubtiefe der Justierschraube 113 in die Gewindebohrung 112 kann die am Gleitstein 37' abgestützte Justierschraube 113 die Arbeitsplatte 7 bei geeigneter Einschraubtiefe von unten her gerade so weit nach oben anheben, daß die Oberflächen der Arbeitsplatten 2 und 7 bündig sind. Auf diese Weise erfüllt der Gleitstein 37' bei der Ausführungsform nach Figur 14 eine weitere Funktion.

## Patentansprüche

1. Küchenmöbel mit zumindest einem Unterschrank- und einem Oberschrankelement (34, 35), wobei
- das Unterschrankelement (34) wenigstens eine über zumindest zwei seitliche Vertikalträger (3, 8, 9, 24, 25) bodenseitig abgestützte Arbeitsplatte (2, 6, 7, 22, 23, 29) aufweist,
- zumindest ein Schrank- und/oder Funktionselement (10, 11, 26) hängend an der Arbeitsplatte (2, 6, 7, 22, 23, 29) und/oder den Vertikalträgern (3, 8, 9, 24, 25) befestigt ist, und
- das Oberschrankelement (35) mit nach unten ragenden Stützen (16) verbunden und über diese am Unterschrankelement (34) abgestützt ist,
dadurch gekennzeichnet,
daß die Unterseite der Arbeitsplatte mit Längsnuten (36) versehen ist, in denen wenigstens ein oder mehrere Vertikalträger (3, 8, 9, 24, 25) verschiebbar an unterschiedlichen Positionen an der Unterseite der Arbeitsplatte (2, 6, 7, 22, 23, 29) festgelegt ist bzw. sind, um zwischen sich Schrank- und/oder Funktionselemente (10, 11, 26) unterschiedlicher Breite aufnehmen zu können, und daß die Schrank- und/oder Funktionselemente (10, 11, 26) in den auf der Unterseite der Arbeitsplatte (2, 6, 7, 22, 23, 29) vorgesehenen Längsnuten (36) verschiebbar und an unterschiedlichen Positionen festlegbar sind.

2. Küchenmöbel nach Anspruch 1,
dadurch gekennzeichnet,
daß die Vertikalträger (3, 8, 9, 24, 25) plattenförmig ausgebildet sind und senkrecht zu den Längsnuten (36) verlaufen.

3. Küchenmöbel nach Anspruch 2,
dadurch gekennzeichnet,
daß die plattenförmigen Vertikalträger (3, 8, 9, 24, 25) sich zumindest im wesentlichen vom vorderen bis zum hinteren Ende der Arbeitsplatte (2, 6, 7, 22, 23, 29) erstrecken.

4. Küchenmöbel nach einem der vorhergehenden Ansprüche,
dadurch gekennzeichnet,
daß mehrere Arbeitsplatten (2, 6, 7) nebeneinander angeordnet und miteinander gekuppelt sind, von denen eine (2) zwei bodenseitig abgestützte Vertikalträger (3) und die weiteren (6, 7) nur einen bodenseitig abgestützten Vertikalträger (8, 9) aufweisen.

5. Küchenmöbel nach einem der vorgehenden Ansprüche, dadurch gekennzeichnet,
daß die Stützen (16) an unterschiedlichen Positionen an der Oberseite der Arbeitsplatte (2, 6, 7) und vorzugsweise auch an der Unterseite einer Trägerplatte (17, 18, 19) befestigbar sind, so daß die Stützen (16) je nach Bedarf unterschiedliche Abstände aufweisen.

6. Küchenmöbel nach einem der vorhergehenden Ansprüche,
dadurch gekennzeichnet,
daß die Stützen (16) im hinteren Bereich der Arbeitsplatte (2, 6, 7, 22, 23, 29) vorzugsweise in ihrem Endbereich an dieser befestigbar sind.

7. Küchenmöbel nach einem der vorhergehenden Ansprüche,
dadurch gekennzeichnet,
daß an der Hinterkante der Arbeitsplatte (2, 6, 7, 22, 23, 29) ein sich vorzugsweise über die gesamte Länge zumindest einer und vorzugsweise aller miteinander verbundenen und ausgerichteten Arbeitsplatten (2, 6, 7) erstreckendes, bevorzugt aus Aluminium bestehendes Profil (43) insbesondere durch lösbare Klemmung befestigt ist, an dem insbesondere ein Fuß (44) der Stütze (16) an beliebigen Stellen festlegbar ist.

8. Küchenmöbel nach einem der Ansprüche 5 bis 7,
dadurch gekennzeichnet,
daß ein zumindest teilweise einen geringfügigen Abstand zur Oberfläche der Arbeitsplatte (2) aufweisender Vorsprung (46) des Profils (43) durch eine Nase (45) am unteren Ende des Fußes (44) der Stütze (16) von vorn untergreifbar ist, wobei die Nase (45) und/oder der Vorsprung (46) vorzugsweise derart keilförmig ausgebildet sind, daß beim Schieben der Nase (45) nach hinten unter den Vorsprung (46) eine Verklemmung zwischen dem Fuß (44), dem Profil (43) und der Arbeitsplatte (2) erfolgt, und daß vorzugsweise der Spalt (41) zwischen dem Vorsprung (43) und der Oberfläche der Arbeitsplatte (2, 6, 7) zwischen den Stützen (16) durch eine schnurartige Dichtung (60) abgedichtet ist.

9. Küchenmöbel nach Anspruch 7 oder 8,
dadurch gekennzeichnet,
daß der Fuß (44) der Stütze (16) durch Klemmschrauben (47) am Profil (43) festklemmbar ist.

10. Küchenmöbel nach Anspruch 9,
dadurch gekennzeichnet,
daß die Klemmschraube (47) mit der vorderen Flanke (49) einer V-Nut (48) in der Oberseite des Vorsprunges (46) des Profils (43) derart zusammenwirken, daß beim Festziehen der Klemmschrauben (47) der Fuß (44) der Stütze (16) nach hinten in eine festgeklemmte Position gezogen wird.

11. Küchenmöbel nach einem der Ansprüche 7 bis 10,
dadurch gekennzeichnet,
daß das Profil (43) einen durchgehenden Längshohlraum (50) aufweist, in dem Leitungen (51) verlegbar sind.

12. Küchenmöbel nach Anspruch 11,
dadurch gekennzeichnet,
daß der Längshohlraum (50) nach vorne offen und dort durch einen herausnehmbaren Verschlußstreifen (52), der vorzugsweise ebenfalls aus Aluminium besteht, wahlweise zu öffnen und zu schließen ist.

13. Küchenmöbel nach einem der Ansprüche 7 bis 12,
dadurch gekennzeichnet,
daß das Profil (43) oben einen oben offenen Längskanal (53) aufweist, in den eine mit dazu komplementären Unterkante (55) versehene Rückwand (54) einsetzbar ist.

14. Küchenmöbel nach einem der Ansprüche 7 bis 13,
dadurch gekennzeichnet,
daß das Profil (43) die Hinterkante der Arbeitsplatte (2) bzw. der Arbeitsplatten (2, 6, 7) U-förmig umgreift und der untere Schenkel (56) des U-Profils in bestimmten Abständen Gewindebohrungen (57) aufweist, in denen Ausgleichsschrauben (58) angeordnet werden können.

15. Küchenmöbel nach einem der Ansprüche 9 bis 13,
dadurch gekennzeichnet,
daß am Profil (43) Mittel (101, 102, 103, 104, 105) zur Stabilisierung der Verbindung zwischen Arbeitsplatte (2, 6, 7, 22, 23, 29) und Vertikalträger (3, 8, 9, 24, 25) vorgesehen sind.

16. Küchenmöbel nach Anspruch 15,
dadurch gekennzeichnet,
daß das Profil (43) unten eine Rippe (101) aufweist, auf der ein Schieber (102) angeordnet ist, der einen sich bis zu einer Längsnut (36) der Arbeitsplatte (2, 6, 7, 22, 23, 29) erstreckenden Arm (103) aufweist, und dort an einem in der Längsnut (36) angeordneten Gleitstein (37) befestigbar ist.

17. Küchenmöbel nach Anspruch 16,
dadurch gekennzeichnet,
daß sich von dem von der Rippe (101) abgewandten Endbereich des Armes (103) eine Schrägstrebe (105) nach unten und hinten erstreckt und an ihrem vom Arm (103) abgewandten Endbereich an dem Vertikalträger (3, 8, 9, 24, 25) befestigt ist.

18. Küchenmöbel nach einem der vorhergehenden Ansprüche,
dadurch gekennzeichnet,
daß die Stützen (16) oben nach vorn weisende Kragarme (59) aufweisen und dort mit wenigstens einer der vorzugsweise parallel zu den Arbeitsplatten (2, 6, 7) verlaufenden Trägerplatten (17, 18, 19) verbunden sind.

19. Küchenmöbel nach Anspruch 18,
dadurch gekennzeichnet,
daß die Trägerplatten (17, 18, 19) unten Längsnuten (36) aufweisen, in denen das obere Ende der Stütze (16) bzw. die Kragarme (59) und/oder Schrank- und/oder Funktionselemente (20, 21) an jeder beliebigen Stelle in Längsrichtung festlegbar ist bzw. sind.

20. Küchenmöbel nach Anspruch 18 oder 19,
dadurch gekennzeichnet,
daß wenigstens eine Trägerplatte auch oben wenigstens eine Längsnut (36) aufweist, in der Schrank- und/oder Funktionselemente (20) an jeder beliebigen Stelle in Längsrichtung festlegbar sind.

21. Küchenmöbel nach einem der vorhergehenden Ansprüche,
dadurch gekennzeichnet,
daß die Längsnuten (36) hinterschnitten, insbesondere schwalbenschwanzartig ausgebildet sind und komplementär geformte Gleitsteine (37) enthalten, mittels jeweils einem oder mehreren von denen zumindest ein Vertikalträger (3, 8, 9, 24, 25) und/oder zumindest das obere Ende einer Stütze (16) bzw. die dort vorgesehenen Kragarme (59) und zumindest ein Schrank- und/oder Funktionselement (10, 11, 20, 21, 26) an der Arbeitsplatte (2, 6, 7, 22, 23, 29) bzw. der Trägerplatte (17, 18, 19) in Richtung der Längsnuten (36) verschiebbar festlegbar sind.

22. Küchenmöbel nach einem der vorhergehenden Ansprüche,
dadurch gekennzeichnet,
daß in der Unterseite der Arbeitsplatte (2, 6, 7, 22, 23, 29) und/oder der Trägerplatte (17, 18, 19) im Abstand hintereinander zwei Längsnuten (36) parallel zueinander angeordnet sind, wobei der Abstand vorzugsweise so groß ist, daß zwischen den Längsnuten (36) eine Ausnehmung (30) in der Arbeitsplatte (29) Platz hat, die z.B. zur Aufnahme einer Spüle (13) dient.

23. Küchenmöbel nach einem der Ansprüche 20 bis 22,
dadurch gekennzeichnet,
daß in der Oberseite der Trägerplatten (17, 18, 19) vorzugsweise in der Mitte eine Längsnut (36) vorgesehen ist.

24. Küchenmöbel nach einem der Ansprüche 21 bis 23,
dadurch gekennzeichnet,
daß sich von den Gleitsteinen (37) in Bohrungen der Vertikalträger (3, 8, 9, 24, 25) und/oder die Schrank- und/oder Funktionselemente (10, 11, 20, 21, 26) oder entlang ihrer Wände Bolzen (38) erstrecken und mit diesem fest verbindbar sind, und daß die Bolzen (38) bevorzugt mit Gewinde versehen und in die mit einer entsprechenden Gewindebohrung (39) versehenen Gleitsteine (37) bis zu einer gewünschten Tiefe einschraubbar sind.

25. Küchenmöbel nach Anspruch 24,
dadurch gekennzeichnet,
daß die entsprechend ausgebildeten Bolzen (38) mit einem Exzenter in den Vertikalträgern (3, 8, 9, 24, 25) bzw. den Schrank- und/oder Funktionselementen (10, 11, 20, 21, 26) derart zusammenwirken, daß nach dem Verschieben des Vertikalträgers (3, 8, 9, 24, 25) bzw. der Schrank- und/oder Funktionselemente (10, 11, 20, 21, 26) an die gewünschte Stelle in den Längsnuten (36) die Lage des Vertikalträgers (3, 8, 9, 24, 25) bzw. des Schrank- und/oder Funktionselements (10, 11, 20, 21, 26) an der Arbeitsplatte (2, 6, 7, 22, 23, 29) bzw. der Trägerplatte (17, 18, 19) durch Drehen des Exzenters (40) festlegbar ist.

26. Küchenmöbel nach einem der Ansprüche 21 bis 24,
dadurch gekennzeichnet,
daß mit den Gleitsteinen (37, 37') ein Haken (63) verbunden ist, der mit einem vorzugsweise als Kniehebel ausgebildeten Schnappverschluß (42) am Vertikalträger (3, 8, 9, 24, 25) bzw. am Schrank- und/oder Funktionselement (10, 11, 20, 21, 26) derart zusammenwirkt, daß nach dem Verschieben des Vertikalträgers (3, 8, 9, 24, 25) bzw. des Schrank- und/oder Funktionselements (10, 11, 20, 21, 26) an die gewünschte Stelle in den Längsnuten (36) die Lage des Vertikalträgers (3, 8, 9, 24, 25) bzw. des Schrank- und/oder Funktionselements (10, 11, 20, 21, 26) an der Arbeitsplatte (2, 6, 7, 22, 23, 29) bzw. der Trägerplatte (17, 18, 19) durch Verschließen des Schnappverschlusses (42) festlegbar ist.

27. Küchenmöbel nach Anspruch 24,
dadurch gekennzeichnet,
daß die Bolzen (38) zum Anschrauben der Vertikalträger (3, 8, 9, 24, 25) bzw. der Schrank- und/oder Funktionselemente (10, 11, 20, 21, 26) bzw. des oberen Endes der Stütze (16) bzw. des Kragarms (59) an die Arbeitsplatte (2, 6, 7, 22, 23, 29) bzw. die Trägerplatte (17, 18, 19) dienen.

28. Küchenmöbel nach einem der vorhergehenden Ansprüche,
dadurch gekennzeichnet,
daß die Vertikalträger (3, 8, 9, 24, 25) an ihrer Unterseite bzw. Unterkante mit in der Höhe verstellbaren Füßen (12) versehen sind.

29. Küchenmöbel nach einem der vorhergehenden Ansprüche,
dadurch gekennzeichnet,
daß in eine Aussparung (30) der Arbeitsplatte (29) ein Funktionselement (13) integrierbar ist, wobei die mit der Aussparung (30) versehene Arbeitsplatte (29) zum Zweck der wahlweisen Links- und Rechtsmontage achsensymmetrisch zu ihrer Mittellängsachse (31) ausgebildet ist.

30. Küchenmöbel nach einem der vorhergehenden Ansprüche,
dadurch gekennzeichnet,
daß zwei Arbeitsplatten (22, 23) zur Ausbildung eines Eckbereiches senkrecht zueinander ausgerichtet sind, wobei die dem Eckbereich zugewandten Vertikalträger (24, 25) beider Arbeitsplatten (22, 23) gegenüber dem den Eckbereich zugewandten Ende der jeweiligen Arbeitsplatte (22, 23) versetzt angeordnet sind.

31. Küchenmöbel nach einem der vorhergehenden Ansprüche,
dadurch gekennzeichnet,
daß die Längsnuten (36) in Nutenprofilen (36') ausgebildet sind, die in entsprechende Längskanäle (36'') der Arbeits- und/oder Trägerplatten (2, 6, 7, 22, 23, 29; 17, 18, 19) eingesetzt sind und vorzugsweise aus Metall, insbesondere Aluminium bestehen.

32. Küchenmöbel nach Anspruch 31,
dadurch gekennzeichnet,
daß die Nutenprofile (36') einen schwalbenschwanzförmigen Querschnitt aufweisen.

33. Küchenmöbel nach Anspruch 31,
dadurch gekennzeichnet,
daß die Nutenprofile (36"') einen wesentlich größeren Querschnitt als die Längsnuten (36) aufweisen.

34. Küchenmöbel nach Anspruch 33,
dadurch gekennzeichnet,
daß die Nutenprofile (36''') einen im wesentlichen rechteckigen Querschnitt aufweisen, in dem vorzugsweise den Halt in der Platte (2, 6, 7, 22, 23, 29; 17, 18, 19) verbessernde Vertiefungen (36'''') vorgesehen sind.

35. Küchenmöbel nach Anspruch 33 oder 34,
dadurch gekennzeichnet,
daß der Querschnitt des Nutenprofils (36"') unsymmetrisch zur vertikalen Mittellängsebene der zugeordneten Längsnut (36) ist, und zwar vorzugsweise derart, daß das Nutenprofil (36''') zum nächstliegenden Rand (109, 110) weiter über die Längsnut (36) vorsteht als nach innen.

36. Küchenmöbel nach einem der Ansprüche 21 bis 35,
dadurch gekennzeichnet,
daß im Übergangsbereich von wenigstens einer der Arbeits- und/oder Trägerplatten (2) zur angrenzenden (7) die Stoßstelle (111) überbrückende Gleitsteine (37') vorgesehen sind, die auf der einen Seite der Stoßstelle (111) mit einem Vertikalträger (3) oder Schrank- und/oder Funktionselement verbunden ist und auf der anderen Seite der Stoßstelle (111) vertikal gegen die dortige Platte (7) derart verspannt ist, daß die Oberflächen der beiden Platten (2, 7) zueinander definiert ausgerichtet, insbesondere bündig sind.

37. Küchenmöbel nach Anspruch 36,
dadurch gekennzeichnet,
daß der in die angrenzende Platte (7) reichende Bereich des Gleitsteines (37') eine zumindest im wesentlichen vertikale Gewindebohrung (112) aufweist, in die von unten eine Justierschraube (113) einschraubbar und mit der Unterseite der dortigen Platte (7) in tragenden Eingriff bringbar ist.

## Claims

1. Kitchen furniture having at least one lower cupboard element and one upper cupboard element (34, 35), with
- the lower cupboard element (34) having at least one worktop (2, 6, 7, 22, 23, 29) supported at the floor side via at least two laterally disposed vertical supports (3, 8, 9, 24, 25);
- at least one cupboard element and/or functional element (10, 11, 26) being suspended from the worktop (2, 6, 7, 22, 23, 29) and/or on the vertical supports (3, 8, 9, 24, 25); and
- the upper cupboard element (35) being connected to downwardly projecting supports (16) and being supported on the lower cupboard element (34) thereby;
characterised in that the lower side of the worktop is provided with elongate grooves (36) in which at least one or more vertical supports (3, 8, 9, 24, 25) is/are displaceably fixed to the lower side of the worktop (2, 6, 7, 22, 23, 29) at different positions in order to be able to receive cupboard elements and/or functional elements (10, 11, 26) of different widths between them; and in that the cupboard elements and/or functional elements (10, 11, 26) are displaceably fixable into the elongate grooves (36) provided at the lower side of the worktop (2, 6, 7, 22, 23, 29) and are fixable at different positions.

2. Kitchen furniture in accordance with claim 1 characterised in that the vertical supports (3, 8, 9, 24, 25) are formed in plate-like shape and extend perpendicular to the elongate grooves (36).

3. Kitchen furniture in accordance with claim 2 characterised in that the plate-like vertical supports (3, 8, 9, 24, 25) extend at least substantially from the front to the rear end of the worktop (2, 6, 7, 22, 23, 29).

4. Kitchen furniture in accordance with one of the preceding claims characterised in that a plurality of worktops (2, 6, 7) are arranged next to one another and coupled to one another, of which one (2) has two vertical supports (3) supported on the floor side and the others (6, 7) have only one vertical support (8, 9) supported on the floor side.

5. Kitchen furniture in accordance with one of the preceding claims characterised in that the supports (16) can be fastened to the upper side of the worktop (2, 6, 7) at different positions and preferably also to the lower side of a support panel (17, 18, 19) so that the supports (16) can have different spacings as required.

6. Kitchen furniture in accordance with one of the preceding claims characterised in that the supports (16) can be fastened to the worktop (2, 6, 7, 22, 23, 29) in the rear region thereof, preferably in its end region.

7. Kitchen furniture in accordance with one of the preceding claims characterised in that a section (43) preferably made of aluminium and extending preferably over the whole length of at least one and preferably all worktops (2, 6, 7) connected to and aligned with one another is fastened, in particular by a releasable clamp, to the rear edge of the worktop (2, 6, 7, 22, 23, 29), with in particular a base (44) of the support (16) being connectable to said section (43) at any desired position.

8. Kitchen furniture in accordance with one of the claims 5 to 7 characterised in that a projection (46) of the section (43) having a slight spacing from the surface of the worktop (2) at least in part, can be engaged from below from the front by a nose (45) at the lower end of the base (44) of the support (16), with the nose (45) and/or the projection (46) preferably being formed in a wedge-like shape such that a clamping takes place between the base (44), the section (43) and the worktop (2) when the nose (45) is pushed backwards underneath the projection (46); and in that the gap (41) between the projection (43) and the surface of the worktop (2, 6, 7) is preferably sealed by a cord-like seal (60) between the supports (16).

9. Kitchen furniture in accordance with claim 7 or claim 8 characterised in that the base (44) of the support (16) can be clamped to the section (43) by clamping screws.

10. Kitchen furniture in accordance with claim 9 characterised in that the clamping screws (47) cooperate with the front flank (49) of a V-shaped groove (48) in the upper side of the projection (46) such that the base (44) of the support (16) is pulled backwards into a clamped position when the clamping screws (47) are tightened.

11. Kitchen furniture in accordance with one of the claims 7 to 10 characterised in that the section (43) has a continuous elongate hollow space (50) in which lines (51) can be laid.

12. Kitchen furniture in accordance with claim 11 characterised in that the elongate hollow space (50) is open at the front and can be optionally opened and closed there by a removable closing strip (52) which preferably also consists of aluminium.

13. Kitchen furniture in accordance with one of the claims 7 to 12 characterised in that the section (43) has at its top an elongate channel (53) upwardly open into which a rear panel (54) provided with a lower edge (55) complementary thereto can be inserted.

14. Kitchen furniture in accordance with one of the claims 7 to 13 characterised in that the section (43) engages around the rear edge of the worktop (2) or of the worktops (2, 6, 7) in a U-shaped manner and the lower leg (56) of the U-section has tapped bores (57) at certain intervals in which equalising screws (58) can be arranged.

15. Kitchen furniture in accordance with one of the claims 9 to 13 characterised in that means (101, 102, 103, 104, 105) to stabilise the connection between the worktop (2, 6, 7, 22, 23, 29) and the vertical supports (3, 8, 9, 24, 25) are provided at the section (43).

16. Kitchen furniture in accordance with claim 15 characterised in that the section (43) has a rib (101) at the bottom on which a slider (102) is arranged which has an arm (103) extending to an elongate groove (36) of the worktop (2, 6, 7, 22, 23, 29) and which can be fastened there to a slide block (37) arranged in the elongate groove (36).

17. Kitchen furniture in accordance with claim 16 characterised in that an oblique strut (105) extends downwardly and backwardly from the end region of the arm (103) remote from the rib (101) and is fastened to the vertical support (3, 8, 9, 24, 25) at the end region of said oblique strut (105) remote from the arm (103).

18. Kitchen furniture in accordance with one of the preceding claims characterised in that the supports (16) have cantilevers (59) directed forwards at the top and are connected there to at least one of the support panels (17, 18, 19) preferably extending parallel to the worktops (2, 6, 7).

19. Kitchen furniture in accordance with claim 18 characterised in that the support panels (17, 18, 19) have elongate grooves (36) at the bottom in which the upper end of the support (16) or the cantilevers (59) and/or cupboard elements and/or functional elements (20, 21) can be fixed at any point in a longitudinal direction.

20. Kitchen furniture in accordance with claim 18 or claim 19 characterised in that at least one support panel also has at least one elongate groove (36) at the top in which the cupboard elements and/or functional elements (20) can be fixed at any point in the longitudinal direction.

21. Kitchen furniture in accordance with one of the preceding claims characterised in that the elongate grooves (36) are formed in an undercut manner, in particular in a dovetail-like manner, and contain complementarily shaped slide blocks (37) by means of one or more of which respectively at least one vertical support (3, 8, 9, 24, 25) and/or at least the upper end of a support (16) or the cantilevers (59) provided there and at least one cupboard element and/or functional element (10, 11, 20, 21, 26) can be fixed displaceably in the direction of the elongate grooves (36) to the worktop (2, 6, 7, 22, 23, 29) or the support panel (17, 18, 19).

22. Kitchen furniture in accordance with one of the preceding claims characterised in that two elongate grooves (36) are arranged spaced behind one another and parallel to one another in the lower side of the worktop (2, 6, 7, 22, 23, 29) and/or the support panel (17, 18, 19), with the spacing being preferably so large that a recess (30) in the worktop (29), which serves, for example, to receive a sink (13), has room between the elongate grooves (36).

23. Kitchen furniture in accordance with one of the claims 20 to 22 characterised in that an elongate groove (36) is provided in the upper side, preferably in the middle, of the support panels (17, 18, 19).

24. Kitchen furniture in accordance with one of the claims 21 to 23 characterised in that bolts (38) extend from the slide blocks (37) in bores of the vertical supports (3, 8, 9, 24, 25) and/or the cupboard elements and/or functional elements (10, 11, 20, 21, 26) or along their panels, and are fixedly connectable thereto; and in that the bolts (38) are preferably provided with threads and can be screwed up to a desired depth into the slide blocks (37) provided with a corresponding tapped bore (39).

25. Kitchen furniture in accordance with claim 24 characterised in that the correspondingly formed bolts (38) cooperate with an eccentric member in the vertical supports (3, 8, 9, 24, 25) or the cupboard elements and/or functional elements (10, 11, 20, 21, 26) such that the position of the vertical support (3, 8, 9, 24, 25) or of the cupboard element and/or functional element (10, 11, 20, 21, 26) is fixable to the worktop (2, 6, 7, 22, 23, 29) or the support panel (17, 18, 19) by turning the eccentric member (40) after the displacement of the vertical support (3, 8, 9, 24, 25) or the cupboard elements and/or functional elements (10, 11, 20, 21, 26) to the desired position in the elongate grooves (36).

26. Kitchen furniture in accordance with one of the claims 21 to 24 characterised in that a hook (63) is connected to the slide blocks (37, 37') and cooperates with a snap closure (42), preferably formed as a toggle joint, at the vertical support (3, 8, 9, 24, 25) or at the cupboard element and/or functional element (10, 11, 20, 21, 26) such that the position of the vertical support (3, 8, 9, 24, 25) or of the cupboard elements and/or functional elements (10, 11, 20, 21, 26) is fixable to the worktop (2, 6, 7, 22, 23, 29) or the support panel (17, 18, 19) by closing the snap closure (40) after the displacement of the vertical support (3, 8, 9, 24, 25) or the cupboard element and/or functional element (10, 11, 20, 21, 26) to the desired position in the elongate grooves (36).

27. Kitchen furniture in accordance with claim 24 characterised in that the bolts (38) serve to screw the vertical supports (3, 8, 9, 24, 25) or the cupboard elements and/or functional elements (10, 11, 20, 21, 26) or the upper end of the support (16) or the cantilever (59) to the worktop (2, 6, 7, 22, 23, 29) or the support panel (17, 18, 19).

28. Kitchen furniture in accordance with one of the preceding claims characterised in that the vertical supports (3, 8, 9, 24, 25) are provided with vertically adjustable bases (12) at their lower side or lower edge.

29. Kitchen furniture in accordance with one of the preceding claims characterised in that a functional element (13) can be integrated into a recess (30) of the worktop (29), with the worktop (29) provided with the recess (30) being formed for the purpose of alternate lefthand or right-hand mounting axially symmetrically to its middle longitudinal axis (31).

30. Kitchen furniture in accordance with one of the preceding claims characterised in that two worktops (22, 23) are aligned perpendicularly to one another to form a corner region, with the vertical supports (24, 25) of both worktops (22, 23) remote from the corner region being arranged offset with respect to the end of the respective worktop (22, 23) facing the corner region.

31. Kitchen furniture in accordance with one of the preceding claims characterised in that the elongate grooves (36) are formed in groove sections (36') which are set into corresponding elongate channels (36") of the worktops and/or support panels (2, 6, 7, 22, 23, 29; 17 18, 19) and which preferably consist of metal, in particular aluminium.

32. Kitchen furniture in accordance with claim 31 characterised in that the groove sections (36') have a dovetail cross-section.

33. Kitchen furniture in accordance with claim 31 characterised in that the groove sections (36"') have a significantly greater cross-section than the elongate grooves (36).

34. Kitchen furniture in accordance with claim 33 characterised in that the groove sections (36"') have a substantially rectangular cross-section, in which recesses (36"") are provided which preferably enhance the retention in the worktop or panel (2, 6, 7, 22, 23, 29; 17, 18, 19).

35. Kitchen furniture in accordance with claim 33 or claim 34 characterised in that the cross-section of the groove section (36"') is asymmetrical to the vertical central longitudinal plane of the associated elongate groove (36), and indeed preferably such that the groove section (36"') protrudes further over the elongate groove (36) to the next closest edge (109, 110) than inwardly.

36. Kitchen furniture in accordance one of the claims 21 to 35 characterised in that slide blocks (37') bridging the joint (111) are provided in the transition region from at least one of the worktops and/or support panels (2) to the adjacent one (7) and are connected at the one side of the joint (111) to a vertical support (3) or a cupboard element and/or functional element and are vertically braced at the other side of the joint (111) against the worktop (7) there such that the surfaces of the two panels (2, 7) are aligned in a defined way to one another and are in particular flush with one another.

37. Kitchen furniture in accordance with claim 36 characterised in that the region of the slide block (37') extending into the adjacent panel (7) has an at least substantially vertical tapped bore (112) into which a clamping screw (113) can be screwed from below which can be brought into bearing engagement with the lower side of the panel (7) there.

## Revendications

1. Meuble de cuisine comportant au moins un élément d'armoire inférieur et un élément d'armoire supérieur (34, 35), dans lequel :
- l'élément d'armoire inférieur (34) comprend au moins une plaque de travail (2, 6, 7, 22, 23, 29) supportée du côté sol par au moins deux supports latéraux verticaux (3, 8, 9, 24, 25),
- au moins un élément d'armoire et/ou fonctionnel (10, 11, 26) est fixé en suspension sur la plaque de travail (2, 6, 7, 22, 23, 29) et/ou sur les supports verticaux (3, 8, 9, 24, 25), et
- l'élément d'armoire supérieur (35) est relié à des montants (16) dépassant vers le bas et est soutenu au moyen de ces derniers sur l'élément d'armoire inférieur (34),
caractérisé en ce que la face inférieure de la plaque de travail est pourvue de gorges longitudinales (36) dans lesquelles au moins un ou plusieurs supports verticaux (3, 8, 9, 24, 25) est ou sont fixé(s) en déplacement dans des positions différentes sur la face inférieure de la plaque de travail (2, 6, 7, 22, 23, 29), afin de pouvoir recevoir entre eux des éléments d'armoire et/ou fonctionnels (10, 11, 26) de différentes largeurs, et en ce que les éléments d'armoire et/ou fonctionnels (10, 11, 26) sont mobiles dans les gorges longitudinales (36) prévues sur la face inférieure de la plaque de travail (2, 6, 7, 22, 23, 29) et sont susceptibles d'être fixés dans des positions différentes.

2. Meuble de cuisine selon la revendication 1, caractérisé en ce que les supports verticaux (3, 8, 9, 24, 25) sont réalisés en forme de plaque et s'étendent perpendiculairement par rapport aux gorges longitudinales (36).

3. Meuble de cuisine selon la revendication 2, caractérisé en ce que les supports verticaux en forme de plaque (3, 8, 9, 24, 25) s'étendent au moins sensiblement depuis l'extrémité avant jusqu'à l'extrémité arrière de la plaque de travail (2, 6, 7, 22, 23, 29).

4. Meuble de cuisine selon l'une quelconque des revendications précédentes, caractérisé en ce que plusieurs plaques de travail (2, 6, 7) sont agencées les unes à côté des autres et accouplées les unes aux autres, dont l'une (2) comprend deux supports verticaux (3) appuyés du côté sol et dont les autres (6, 7) ne comprennent qu'un seul support vertical (8, 9) appuyé du côté sol.

5. Meuble de cuisine selon l'une quelconque des revendications précédentes, caractérisé en ce que les montants (16) sont susceptibles d'être fixés dans des positions différentes sur la face supérieure de la plaque de travail (2, 6, 7) et de préférence également sur la face inférieure d'une plaque porteuse (17, 18, 19), de sorte que les montants (16) présentent des distances différentes en fonction des besoins.

6. Meuble de cuisine selon l'une quelconque des revendications précédentes, caractérisé en ce que les montants (16) sont susceptibles d'être fixés dans la zone arrière de la plaque de travail (2, 6, 7, 22, 23, 29), de préférence par leur zone d'extrémité.

7. Meuble de cuisine selon l'une quelconque des revendications précédentes, caractérisé en ce que sur l'arête arrière de la plaque de travail (2, 6, 7, 22, 23, 29) est fixé, en particulier par pincement détachable, un profilé (43) constitué de préférence en aluminium qui s'étend de préférence sur toute la longueur d'au moins une et de préférence de toutes les plaques de travail (2, 6, 7) reliées les unes aux autres et alignées les unes par rapport aux autres, profilé sur lequel peut être en particulier fixé un pied (44) du montant (16) à des emplacements quelconques.

8. Meuble de cuisine selon l'une quelconque des revendications 5 à 7, caractérisé en ce qu'une saillie (46) du profilé (43), laquelle présente du moins partiellement une faible distance par rapport à la surface de la plaque de travail (2), peut être engagée par le dessous depuis l'avant par un bec (45) à l'extrémité inférieure du pied (44) du montant (16), le bec (45) et/ou la saillie (46) étant réalisé(e) de préférence en forme de coin de telle sorte que lors du déplacement du bec (45) vers l'arrière au-dessous de la saillie (46) un pincement a lieu entre le pied (44), le profilé (43), et la plaque de travail (2), et en ce que de préférence la fente (41) entre la saillie (43) et la surface de la plaque de travail (2, 6, 7) est étanchée entre les montants (16) par un joint d'étanchéité (60) en forme de corde.

9. Meuble de cuisine selon l'une ou l'autre des revendications 7 et 8, caractérisé en ce que le pied (44) du montant (16) peut être pincé sur le profilé (43) par des vis (47).

10. Meuble de cuisine selon la revendication 9, caractérisé en ce que la vis (47) coopère avec le flanc avant (49) d'une gorge en V (48) dans la face supérieure de la saillie (46) du profilé (43), de telle sorte lors du serrage des vis (47) le pied (44) du montant (16) est tiré vers l'arrière dans une position serrée.

11. Meuble de cuisine selon l'une quelconque des revendications 7 à 10, caractérisé en ce que le profilé (43) présente une cavité longitudinale continue (50) dans laquelle peuvent être posés des câbles (51).

12. Meuble de cuisine selon la revendication 11, caractérisé en ce que la cavité longitudinale (50) est ouverte vers l'avant et peut y être au choix dégagée ou refermée par un ruban d'obturation amovible (52), constitué de préférence également en aluminium.

13. Meuble de cuisine selon l'une quelconque des revendications 7 à 12, caractérisé en ce que le profilé (43) présente en haut un canal longitudinal (53) ouvert en haut dans lequel peut venir s'introduire une paroi arrière (54) pourvue d'une arête inférieure (55) complémentaire audit canal.

14. Meuble de cuisine selon l'une quelconque des revendications 7 à 13, caractérisé en ce que le profilé (43) entoure en forme de U l'arête arrière de la plaque de travail (2) ou des plaques de travail (2, 6, 7), et en ce que le bras inférieur (56) du profilé en U présente à des distances déterminées des perçages taraudés (57) dans lesquels peuvent être agencées des vis de compensation (58).

15. Meuble de cuisine selon l'une quelconque des revendications 9 à 13, caractérisé en ce que sur le profilé (43) sont prévus des moyens (101, 102, 103, 104, 105) pour stabiliser la jonction entre la plaque de travail (2, 6, 7, 22, 23, 29) et le support vertical (3, 8, 9, 24, 25).

16. Meuble de cuisine selon la revendication 15, caractérisé en ce que le profilé (43) présente en bas une nervure (101) sur laquelle est agencé un poussoir (102) qui comprend un bras (103) s'étendant jusqu'à une gorge longitudinale (36) de la plaque de travail (2, 6, 7, 22, 23, 29) et qui peut y être fixé sur un coulisseau (37) agencé dans la gorge longitudinale (36).

17. Meuble de cuisine selon la revendication 16, caractérisé en ce qu'une entretoise oblique (105) s'étend depuis la zone d'extrémité du bras (103) détournée de la nervure (101) vers le bas et vers l'arrière et est fixée par sa zone d'extrémité détournée du bras (103) sur le support vertical (3, 8, 9, 24, 25).

18. Meuble de cuisine selon l'une quelconque des revendications précédentes, caractérisé en ce que les montants (16) comprennent en haut des bras en porte à faux (59) dirigés vers l'avant et sont reliés ici à l'une au moins des plaques porteuses (17, 18, 19) s'étendant de préférence parallèlement aux plaques de travail (2, 6, 7).

19. Meuble de cuisine selon la revendication 18, caractérisé en ce que les plaques porteuses (17, 18, 19) présentent en bas des gorges longitudinales (36) dans lesquelles l'extrémité supérieure du montant (16) ou les bras en porte à faux (59) et/ou les éléments d'armoire et/ou fonctionnels (20, 21) peut ou peuvent être fixé(es) à tout emplacement quelconque en direction longitudinale.

20. Meuble de cuisine selon l'une ou l'autre des revendications 18 et 19, caractérisé en ce que l'une au moins des plaques porteuses présente également en haut au moins une gorge longitudinale (36) dans laquelle des éléments d'armoire et/ou fonctionnels (20) peuvent être fixés à tout emplacement quelconque en direction longitudinale.

21. Meuble de cuisine selon l'une quelconque des revendications précédentes, caractérisé en ce que les gorges longitudinales (36) sont réalisées en contre-dépouille, en particulier en forme de queue d'aronde, et reçoivent des coulisseaux (37) de forme complémentaire, et en ce qu'au moins un support vertical (3, 8, 9, 24, 25) et/ou au moins l'extrémité supérieure d'un montant (16) ou les bras en porte à faux (59) qui y sont prévus, et au moins un élément d'armoire et/ou fonctionnel (10, 11, 20, 21, 26), peuvent être fixés en déplacement en direction des gorges longitudinales (36) sur la plaque de travail (2, 6, 7, 22, 23, 29) ou sur la plaque porteuse (17, 18, 19) au moyen d'un coulisseau ou de plusieurs desdits coulisseaux.

22. Meuble de cuisine selon l'une quelconque des revendications précédentes, caractérisé en ce que dans la face inférieure de la plaque de travail (2, 6, 7, 22, 23, 29) et/ou de la plaque porteuse (17, 18, 19) deux gorges longitudinales (36) sont prévues parallèlement l'une à l'autre à distance l'une derrière l'autre, la distance étant de préférence aussi grande qu'il existe entre les gorges longitudinales (36) dans la plaque de travail (29) une place suffisante pour un évidement (30) qui sert par exemple à recevoir un évier (13).

23. Meuble de cuisine selon l'une quelconque des revendications 20 à 22, caractérisé en ce qu'une gorge longitudinale (36) est prévue dans la face supérieure des plaques porteuses (17, 18, 19), de préférence au milieu.

24. Meuble de cuisine selon l'une quelconque des revendications 21 à 23, caractérisé en ce que des boulons (38) s'étendent depuis les coulisseaux (37) soit dans des perçages des supports verticaux (3, 8, 9, 24, 25) et/ou des éléments d'armoire et/ou fonctionnels (10, 11, 20, 21, 26), soit le long de leurs parois, et peuvent être fermement reliés à ceux-ci, et en ce que les boulons (38) sont pourvus de préférence de filetages et peuvent être vissés jusqu'à une profondeur désirée dans les coulisseaux (37) pourvus d'un perçage taraudé correspondant (39).

25. Meuble de cuisine selon la revendication 24, caractérisé en ce que les boulons (38) réalisés en correspondance coopèrent avec un excentrique dans les supports verticaux (3, 8, 9, 24, 25) ou dans les éléments d'armoire et/ou fonctionnels (10, 11, 20, 21, 26), de telle sorte qu'après le déplacement du support vertical (3, 8, 9, 24, 25) ou des éléments d'armoire et/ou fonctionnels (10, 11, 20, 21, 26) jusqu'à l'emplacement désiré dans les gorges longitudinales (36), la position du support vertical (3, 8, 9, 24, 25) ou de l'élément d'armoire et/ou fonctionnel (10, 11, 20, 21, 26) sur la plaque de travail (2, 6, 7, 22, 23, 29) ou sur la plaque porteuse (17, 18, 19) peut être déterminée par rotation de l'excentrique (40).

26. Meuble de cuisine selon l'une quelconque des revendications 21 à 24, caractérisé en ce qu'aux coulisseaux (37, 37') est relié un crochet (63) qui coopère avec un blocage à encliquetage (42) réalisé de préférence sous forme de levier à genouillère sur le support vertical (3, 8, 9, 24, 25) ou sur l'élément d'armoire et/ou fonctionnel (10, 11, 20, 21, 26), de telle sorte qu'après le déplacement du support vertical (3, 8, 9, 24, 25) ou de l'élément d'armoire et/ou fonctionnel (10, 11, 20, 21, 26) jusqu'à l'emplacement désiré dans les gorges longitudinales (36), la position du support vertical (3, 8, 9, 24, 25) ou de l'élément d'armoire et/ou fonctionnel (10, 11, 20, 21, 26) sur la plaque de travail (2, 6, 7, 22, 23, 29) ou sur la plaque porteuse (17, 18, 19) peut être déterminée par fermeture du blocage à encliquetage (42).

27. Meuble de cuisine selon la revendication 24, caractérisé en ce que les boulons (38) servent à visser les supports verticaux (3, 8, 9, 24, 25) ou les éléments d'armoire et/ou fonctionnels (10, 11, 20, 21, 26) ou l'extrémité supérieure du montant (16) ou le bras en porte à faux (59) sur la plaque de travail (2, 6, 7, 22, 23, 29) ou sur la plaque porteuse (17, 18, 19).

28. Meuble de cuisine selon l'une quelconque des revendications précédentes, caractérisé en ce que les supports verticaux (3, 8, 9, 24, 25) sont pourvus de pieds (12) à hauteur réglable sur leur face inférieure ou leur arête inférieure.

29. Meuble de cuisine selon l'une quelconque des revendications précédentes, caractérisé en ce que dans un évidement (30) de la plaque de travail (29) peut être intégré un élément fonctionnel (13), la plaque de travail (29) pourvue de l'évidement (30) étant réalisée à symétrie axiale par rapport à son axe longitudinal médian (31) pour pouvoir procéder au choix à un montage à gauche ou à droite.

30. Meuble de cuisine selon l'une quelconque des revendications précédentes, caractérisé en ce que deux plaques de travail (22, 23) peuvent être orientées perpendiculairement l'une à l'autre pour réaliser une zone de coin, et en ce que les supports verticaux (24, 25) des deux plaques de travail (22, 23) tournés vers la zone de coin sont agencés en décalage par rapport à l'extrémité, tournée vers la zone de coin, de la plaque de travail respective (22, 23).

31. Meuble de cuisine selon l'une quelconque des revendications précédentes, caractérisé en ce que les gorges longitudinales (36) sont ménagées dans des profilés à gorges (36') qui sont mis en place dans des canaux longitudinaux correspondants (36") des plaques de travail et/ou porteuses (2, 6, 7, 22, 23, 29 ; 17, 18, 19) et qui sont constitués de préférence en métal, en particulier en aluminium.

32. Meuble de cuisine selon la revendication 31, caractérisé en ce que les profilés à gorges (36') présentent une section en forme de queue d'aronde.

33. Meuble de cuisine selon la revendication 31, caractérisé en ce que les profilés à gorges (36"') présentent une section nettement plus grande que celle des gorges longitudinales (36).

34. Meuble de cuisine selon la revendication 33, caractérisé en ce que les profilés à gorges (36"') présentent une section sensiblement rectangulaire dans laquelle sont prévus de préférence des renfoncements (36"") qui améliorent le maintien dans la plaque (2, 6, 7, 22, 23, 29 ; 17, 18, 19).

35. Meuble de cuisine selon l'une ou l'autre des revendications 33 et 34, caractérisé en ce que la section du profilé à gorges (36"') est asymétrique par rapport au plan longitudinal médian vertical de la gorge longitudinale associée (36), et ceci de préférence de telle sorte que le profilé à gorges (36"') dépasse au-delà de la gorge longitudinale (36) plus loin en direction de la bordure la plus proche (109, 110) que vers l'intérieur.

36. Meuble de cuisine selon l'une quelconque des revendications 21 à 35, caractérisé en ce qu'il est prévu, dans la zone de transition de l'une au moins des plaques de travail et/ou porteuses (2) vers la plaque adjacente (7), des coulisseaux (37') qui comblent l'emplacement de jointure (111) et qui sont reliés, sur l'un des côtés de l'emplacement de jointure (111), à un support vertical (3) ou à un élément d'armoire et/ou fonctionnel, et qui sont serrés, sur l'autre côté de l'emplacement de jointure (111), verticalement contre la plaque (7) qui s'y trouve, de telle sorte que les surfaces des deux plaques (2, 7) sont alignées de façon définie l'une par rapport à l'autre, en particulier en affleurement.

37. Meuble de cuisine selon la revendication 36, caractérisé en ce que la zone du coulisseau (37'), laquelle s'étend jusque dans la plaque adjacente (7), présente un perçage taraudé (112) du moins sensiblement vertical dans lequel une vis d'ajustage (113) peut être vissée depuis le bas et être amenée en engagement porteur avec la face inférieure de la plaque (7) qui s'y trouve.
